(19) Europäisches Patentamt / European Patent Office / Office européen des brevets

(11) **EP 2 776 785 B1**

(12) **EUROPÄISCHE PATENTSCHRIFT**

(45) Veröffentlichungstag und Bekanntmachung des Hinweises auf die Patenterteilung:
**04.11.2015 Patentblatt 2015/45**

(51) Int Cl.:
***G01B 21/04*** *(2006.01)*

(21) Anmeldenummer: **11782133.0**

(22) Anmeldetag: **10.11.2011**

(86) Internationale Anmeldenummer:
**PCT/EP2011/069878**

(87) Internationale Veröffentlichungsnummer:
**WO 2013/068044 (16.05.2013 Gazette 2013/20)**

(54) **VORBEREITUNG DES BETRIEBES EINES TAKTIL ANTASTENDEN KOORDINATENMESSGERÄTS**

PREPARING A TACTILE PROBING COORDINATE MEASURING MACHINE FOR OPERATION

PRÉPARATION DU FONCTIONNEMENT D'UN APPAREIL DE MESURE DE COORDONNÉES À PALPAGE TACTILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.09.2014 Patentblatt 2014/38**

(73) Patentinhaber: **Carl Zeiss Industrielle Messtechnik GmbH
73447 Oberkochen (DE)**

(72) Erfinder:
• **BERNHARDT, Ralf
73432 Aalen (DE)**
• **FUCHS, Andreas
73492 Rainau (DE)**
• **HELD, Tobias
86720 Nördlingen (DE)**

(74) Vertreter: **Patentanwälte Bressel und Partner mbB
Potsdamer Platz 10
10785 Berlin (DE)**

(56) Entgegenhaltungen:
**EP-A1- 2 385 342          US-A1- 2002 189 319
US-A1- 2011 000 277**

• **KÜNG A ET AL: "Ultraprecision micro-CMM using a low force 3D touch probe", MEASUREMENT SCIENCE AND TECHNOLOGY, IOP, BRISTOL, GB, Bd. 18, Nr. 2, 1. Februar 2007 (2007-02-01), Seiten 319-327, XP020118495, ISSN: 0957-0233, DOI: 10.1088/0957-0233/18/2/S01**

EP 2 776 785 B1

**Beschreibung**

Die vorliegende Erfindung betrifft ein Verfahren zur Vorbereitung des Betriebes eines taktil antastenden Koordinatenmessgeräts (KMG), ein Verfahren zur Kalibrierung eines Tasters (insbesondere eines Tasters mit einer Tastkugel als Tastelement) eines Koordinatenmessgeräts mit einer Kalibrierkugel und ein Verfahren zur Messwertkorrektur bei einem KMG. Eine Kalibrierkugel ist ein Normal, das auch als Kalibriernormal bezeichnet werden kann, Bei dem Vorgang der Kalibrierung, das heißt der Kalibrierung des Tasters, wird der am KMG montierte Taster dazu genutzt, das Kalibriernormal taktil anzutasten. Dadurch können insbesondere, wie an sich bekannt, entsprechende Kalibrierparameter bestimmt werden. Die Erfindung betrifft ferner ein System mit einem taktil antastenden Koordinatenmessgerät. Bei der Kalibrierung kann es sich insbesondere um das Einmessen (engl.: qualification) eines Tasters am KMG handeln. Außer dem Einmessen kann die Kalibrierung aber auch dazu dienen, zusätzliche Kalibrierparameter als beim Einmessen zu ermitteln.

Bei der Prüfung der Genauigkeit von Koordinatenmessgeräten (KMG) nach ISO 10360 werden für die Spezifikation $MPE_p$ (Volumetrische Antastabweichung) und $MPE_{thp}$ (volumetrische Scanning-Abtastabweichung) Kalibrierkugeln und Taster, insbesondere Taster mit Tastkugeln, verwendet. Diese Kalibrierkugeln und Tastkugeln weisen eine sogenannte Rundheitsabweichung, eine Abweichung von der idealen Kugelform, auf. Die Rundheitsabweichung, die als Toleranz für die Kugeln angegeben wird, führt zu einer Unsicherheit bei der Prüfung. Ist die Toleranz zu groß, kann die angestrebte Genauigkeit bei der Prüfung des Geräts unter Umständen nicht erreicht werden. Überprüft wurde die Rundheitstoleranz mit Rundheitsprüfgeräten, die Kreisschnitte der Kalibrierkugel oder Tastkugel betrachten.

Kleine Rundheitstoleranzen ($< 0,2\ \mu m$) der Kugeln wurden bisher in Kauf genommen, weil der Kugelformfehler das Ergebnis relativ wenig verfälschte bzw. relativ wenig zum Gesamtfehler beitrug. Bei hochgenauen KMG ist der Anteil der Kugelformfehler zur angestrebten Messunsicherheit jedoch so groß, dass eine notwendige Verbesserung der Fertigungstoleranzen unwirtschaftlich wird. Die Kugelformfehler summieren sich bei der Einmessung von Tastkugeln (Tastkugel und Einmesskugel) und anschließend bei der eigentlichen Spezifikationsabnahme (Tastkugel und Prüfkugel). Prüfkugel und Einmesskugel können beide als Kalibriernormal bezeichnet werden, insbesondere als Kalibrierkugel.

Während die Einmesskugel insbesondere zum Einmessen des Tasters zur Vorbereitung des bestimmungsgemäßen Gebrauchs des Tasters genutzt wird, wird die Prüfkugel insbesondere zur Prüfung und Gebrauchsabnahme des KMG genutzt.

Die Publikation von Küng et al., "Ultraprecision micro-CMM using a low force 3D touch probe", Measurement Science and Technology, IOP, Bristol, GB, Bd. 18, Nr. 2., S. 319-327 (ISSN 0957-0233) betrifft ein Verfahren zur Kalibrierung des Durchmessers und der Kartierung der 3D Rundheit dreier Kalibrierkugeln. Das Verfahren erfordert, dass die drei Kugeln in verschiedenen Konfigurationen gegeneinander gemessen werden. Auf diese Weise können absolute Durchmesser ohne externen Referenzstandard erhalten werden.

US 2011000277 A1 betrifft ein Verfahren zur Bestimmung von Tastspitzendurchmessern mit verbesserter Genauigkeit und Verlässlichkeit. Durchgeführt wird eine Routine zur mehrfachen Bestimmung des Tastspitzendurchmessers mit dem Arm eines Koordinatenmessgeräts in verschiedenen Maschinenpositionen. Durchmesserwerte, die mit jeder der Kalibrierungsroutinen in Zusammenhang stehen, können in einer Weise kombiniert werden, dass genauere Durchmessermessungen erhalten werden.

EP 2385342 A1 betrifft eine Vorrichtung zum Kalibrieren eines Koordinatenmessgeräts mit einem Messfühler, wobei die Vorrichtung eine Testkugel, eine Basis, die zur Befestigung an einem Teil des Koordinatenmessgeräts angepasst ist, und einem Schaft umfasst, der die Testkugel mit der Basis verbindet. Die Vorrichtung umfasst ein Referenzelement, das mit dem Koordinatenmessgerät detektierbar ist und eine feste räumliche Beziehung zwischen dem Referenzelement und einem definierten Ursprung auf der Oberfläche der Testkugel aufweist. Das Referenzelement ermöglicht, Kalibrierergebnisse dem Referenzelement zuzuweisen, sodass Fehler in der Kalibrierung präziser definiert werden können.

US 2002189319 A1 betrifft ein Kalibrierverfahren, bei dem ein Referenzmessgerät mit einer Referenzkugel innerhalb des Messraums eines zu kalibrierenden Geräts positioniert wird. Verwendet werden ein Referenz-KMG und ein kleineres, auf dem Referenz-KMG angeordnetes, so genanntes Objekt-KMG. Bei dem Verfahren werden sechs oder mehr Punkte, die gleichmäßig auf der Oberfläche der Referenzkugel verteilt sind, mit der Tastkugel des zu kalibrierenden KMG angetastet, um die zentrale Koordinate der Referenzkugel mit dem zu kalibrierenden KMG zu messen und mit der gemessenen Zentralkoordinate das zu kalibrierende Gerät zu kalibrieren.

Es ist eine Aufgabe der Erfindung, den Betrieb eines taktil antastenden KMG mit geringerer Unsicherheit vorzubereiten.

Ein Grundgedanke der vorliegenden Erfindung besteht darin, die Kalibrierkugel und/oder die Tastkugel separat durch ein Oberflächenmessgerät zu vermessen und das Messergebnis in den Messbereich des KMG zu transferieren. Das Messergebnis steht somit für sämtliche ansonsten üblichen Vorgänge beim Betrieb des KMG zur Verfügung, bei denen die Kalibrierkugel und/oder die Tastkugel verwendet werden. Solche Vorgänge sind insbesondere das Einmessen eines Tasters (z.B. Kalibrierung zur Vorbereitung der Verwendung des Tasters zur taktilen Antastung eines Werkstücks), die Prüfung des KMG (z.B. zum Zweck der Zertifizierung des KMG als einsatzbereites Gerät einer bestimmten Genauigkeitsklasse), die Überprüfung eines oder mehrerer Kalibriernormale, der Vergleich mehrerer, nacheinander am KMG angekoppelter Taster und die bestimmungsgemäße Verwendung des Tasters, der die Tastkugel als Tastelement aufweist, bei der Bestimmung von Koordinaten eines oder mehrerer Werkstücke.

Die separate Vermessung der Kugel oder Kugeln macht es möglich, die Rundheitsabweichung hochgenau zu bestimmen und somit z.B. den Radius der Kugel an einem bestimmten Oberflächenpunkt genau zu kennen. Die Fehlertoleranz an diesem Oberflächenpunkt und entsprechend an einer Vielzahl anderer Oberflächenpunkte der Kugel kann daher entsprechend der Messgenauigkeit des separaten Oberflächenmessgeräts auf einen sehr kleinen Toleranzbereich reduziert werden. Anwendungen liegen daher insbesondere auf dem Gebiet der Vermessung von Werkstücken mittels so genannter Mikrotaster, d.h. Taster mit Tastelementen im Mikrometerbereich oder kleiner. Auf diesem Gebiet treten ohne separate Vermessung der Tastkugel prozentual besonders große Toleranzen auf. Auf dem Gebiet der Mikrotaster ist aber auch die genaue Kenntnis der Oberflächentopographie (d.h. der Oberflächenform) der Kalibrierkugel von Vorteil. Wäre lediglich die Toleranz des Radius der Kalibrierkugel bekannt, würde sich beim Einmessen des Mikrotasters durch taktiles Antasten der Kalibrierkugel die Toleranz unmittelbar auf den Mikrotaster übertragen.

Vorgeschlagen wird insbesondere ein Verfahren zur Vorbereitung des Betriebes eines taktil antastenden Koordinatenmessgeräts, insbesondere zur Vorbereitung der Kalibrierung eines Koordinatenmessgeräts durch taktiles Antasten eines Kalibrierelements mit einem an dem Koordinatenmessgerät angeordneten Taster, umfassend die folgenden Schritte,

- Vermessen der Oberfläche der von einer Idealform einer Kugel abweichenden Tastkugel als Tastelement des Koordinatenmessgeräts, mit einem Oberflächenmessgerät und Bestimmen von Koordinaten mehrerer realer Oberflächenpunkte der Tastkugel in einem Koordinatensystem der Tastkugel,
- in Bezug Setzen eines Referenzmerkmals der Tastkugel zu dem Koordinatensystem der Tastkugel,
- Montieren der Tastkugel an einem taktil antastenden Koordinatenmessgerät in dem Messbereich des taktil antastenden Koordinatenmessgeräts,
- in Bezug Setzen des Koordinatensystems eines Kalibriernormals zu dem Koordinatensystem des Koordinatenmessgeräts,
- Erhalt von Abtastinformationen durch Abtasten des Kalibriernormals mit der am KMG montierten Tastkugel und/oder durch Abtasten des Kalibriernormals mit einem Schaft der am KMG montierten Tastkugel,
- Ermittlung der Position und Ausrichtung des Referenzmerkmals der Tastkugel im Koordinatensystem des KMG durch Auswertung der Abtastinformationen,
- in Bezug Setzen des Koordinatensystems der Tastkugel zu dem Koordinatensystem des Koordinatenmessgeräts, sodass Informationen über Positionen der realen Oberflächenpunkte der Tastkugel in dem Koordinatensystem des Koordinatenmessgeräts vorhanden oder bestimmbar sind.

In einer speziellen Ausführungsform ist in dem vorangehend genannten Verfahren das Kalibriernormal eine Kalibrierkugel, insbesondere eine Prüfkugel oder Einmesskugel, und es werden mit der Kalibrierkugel die folgenden Schritte durchgeführt:

- Vermessen der Oberfläche der von einer Idealform einer Kugel abweichenden Kalibrierkugel, mit einem Oberflächenmessgerät und Bestimmen von Koordinaten mehrerer realer Oberflächenpunkte der Kalibrierkugel in einem Koordinatensystem der Kalibrierkugel,
- in Bezug Setzen eines Referenzmerkmals der Kalibrierkugel zu dem Koordinatensystem der Kalibrierkugel,
- Anordnen der Kalibrierkugel in dem Messbereich des taktil antastenden Koordinatenmessgeräts

sodass beim in Bezug Setzen des Koordinatensystems der Kalibrierkugel zu dem Koordinatensystem des Koordinatenmessgeräts Informationen über Positionen der realen Oberflächenpunkte der Kalibrierkugel in dem Koordinatensystem des Koordinatenmessgeräts vorhanden oder bestimmbar sind.

"In Bezug Setzen" bedeutet bei zwei Koordinatensystemen (kurz: KS), dass Koordinaten aus dem einen KS in dem anderen KS bekannt oder bestimmbar sind. "In Bezug Setzen" bedeutet bei dem Referenzmerkmal, dass die Information über den Ort und Ausrichtung des Referenzmerkmals in dem KS vorhanden oder bestimmbar ist. Insbesondere können daher die Position und Ausrichtung des Referenzmerkmals in dem Koordinatensystem des Koordinatenmessgeräts bestimmt werden, sodass die Positionen der realen Oberflächenpunkte in dem Koordinatensystem des Koordinatenmessgeräts bekannt sind.

Mit dem vorliegenden Verfahren ist es insbesondere möglich, die Radiusabweichung von Oberflächenpunkten einer Tastkugel im Vergleich zu einer idealen Kugel zu erfassen und diese Abweichungen bei Kalibrierung (insbesondere Einmessung) eines Tasters oder bei Vermessung eines Werkstücks durch Antasten mittels einer Tastkugel zu berücksichtigen. Alternativ oder zusätzlich können die verschiedenen Oberflächenpunkte absolut, d.h. nicht auf den Radius der idealen Kugeln, sondern z.B. auf das KS der realen Kugel bezogen, bestimmt und berücksichtigt werden.

Bei dem separaten Oberflächenmessgerät, mit dem die Form und/oder Formfehler einer Kugel bestimmt werden, handelt es sich insbesondere um ein Fizeau-Phaseninterferometer. Ein spezielles Interferometer, das ebenfalls als Oberflächenmessgerät eingesetzt werden kann, ist das Kugelinterferometer der Physikalisch-Technischen Bundesanstalt in Braunschweig, Deutschland. Es wurde ursprünglich dafür konzipiert, das Volumen von kugelförmigen Gegenständen über präzise Durchmessermessungen mit einer Unsicherheit von 1 nm oder weniger zu bestimmen. Die PTB hat aber auch bereits darüber berichtet, dass mit dem Kugelinterferometer richtungsabhängige Radiusinformation bestimmt werden kann. Es werden einzelne Oberflächensegmente der Kugel hinsichtlich ihrer Form vermessen, wobei sich die Oberflächensegmente teilweise überlappen. Aus den Oberflächensegmenten wird ein größerer Oberflächenbereich gebildet, der der absoluten Form der Kugeloberfläche auf einige Nanometer genau entspricht. Allgemeiner formuliert wird als Oberflächenmessgerät vorzugsweise ein Interferometer eingesetzt, d.h. ein Gerät, das mittels eines ersten elektromagnetischen Messstrahls die Kugeloberfläche abtastet und Wegunterschiede des Weges, den der erste Messstrahl zurücklegt und die vom konkreten Radius des Oberflächenpunkts abhängen, durch Vergleich mit einem zweiten Referenzstrahl interferometrisch bestimmt.

Andere Oberflächenmessgeräte können ebenfalls verwendet werden, beispielsweise Formprüfgeräte. Unter Formprüfgeräten werden taktil antastende Koordinatenmessgeräte verstanden, mit denen Formabweichungen bestimmter Körper (z. B. rotationssymmetrischer Körper) mit hoher Genauigkeit erfasst und bewertet werden können. Eine Art von Formprüfgeräten weist einen Drehtisch auf, auf dem der zu prüfende Körper drehbar relativ zu einer Basis des Geräts angeordnet wird. In verschiedenen Drehstellungen des Drehtischs wird der Körper durch taktiles Antasten von dem Gerät vermessen. Bei einer anderen Art von Formprüfgeräten ist das Tastelement, mit dem das Gerät den zu prüfenden Körper antastet, drehbar um eine Drehachse relativ zu weiteren beweglichen Teilen des Geräts. Solche Geräte werden auch als Drehspindelgeräte bezeichnet. Ferner ist es möglich, das Koordinatenmessgerät (das so genannte Ziel-KMG) als Oberflächenmessgerät zu verwenden, an welchem die Tastkugel als Tastelement eingesetzt werden soll, um Werkstücke zu vermessen, oder in dessen Messbereich die Kalibrierkugel angeordnet wird, um insbesondere Taster einzumessen oder ein Abnahmezertifikat für das KMG zu erstellen. In diesem Fall existiert daher kein zusätzliches Oberflächenmessgerät. Allerdings ist in diesem Fall die Tastkugel (wie auch ggf. die Kalibrierkugel und/oder Prüfkugel) selbst ein Messobjekt, das mittels Antastung durch einen am KMG montierten anderen Taster taktil angetastet wird, um die reale Oberflächenform der Kugel zu ermitteln. Alternativ oder zusätzlich sind grundsätzlich auch Verfahren der optischen Vermessung der Oberfläche der Tastkugel durch einen optischen Sensor des KMG möglich. Bezüglich der Vermessung der Oberflächenform einer Kalibrierkugel kann ebenfalls das Ziel-KMG verwendet werden. Z.B. wird die Oberfläche der Kalibrierkugel mit einem am KMG angekoppelten Taster taktil angetastet, dessen Form sehr genau bekannt ist. Generell wird bevorzugt, dass bei Einsatz des Ziel-KMG zum Zwecke der Vermessung der realen Oberflächenform einer Kugel an sich vorhandene Freiheitsgrade der Bewegung des KMG eingeschränkt werden. Dadurch kann die Genauigkeit der Oberflächenvermessung gesteigert werden. Insbesondere findet die Vermessung der Kugeloberfläche durch das Formprüfgerät bei zwei verschiedenen Ausrichtungen der Kugel im Koordinatensystem des Formprüfgerätes statt. Die so erhaltenen zumindest zwei verschiedenen Teil-Messergebnisse der Vermessung der Kugeloberfläche können wie hier anhand eines Interferometers beschrieben zu einer Gesamt-Oberflächeninformation über die Oberfläche der Kugel verknüpft werden.

Zusammenfassend kann daher festgehalten werden: Wenn die Vermessung der Oberfläche einer Kugel mit einem besonders präzise messenden, taktil antastenden KMG durchgeführt werden soll, das insbesondere das Ziel-KMG sein kann, kann eine Drehachse vorhanden sein, d.h. kann das Werkstück und/oder das Tastelement um eine Drehachse gedreht werden, um verschiedene Oberflächenbereiche der Kugel abzutasten. Insbesondere können an sich vorhandene lineare Freiheitsgrade der Bewegung des KMG eingeschränkt oder blockiert sein, da diese in der Regel größere Messfehler bewirken, als es bei Drehbewegungen der Fall ist.

Die Vermessung der Oberfläche der Tastkugel, oder in der vorangehend erwähnten speziellen Ausführungsform auch einer Kalibrierkugel, mit dem Oberflächenmessgerät erfolgt vorzugsweise als Kugelsegmentmessung. Die Oberflächen mehrerer Kugelsegmente können zum Beispiel indirekt über den Bezug zum KS des Messgeräts oder über einen Best-Fit (d.h. Optimierungsrechnung) der Messbereichsüberlappung benachbarter Kugelsegmente zu einem vermessenen Oberflächenbereich der Tastkugel oder Kalibrierkugel oder zu einer vollständigen Oberfläche der Tastkugel oder Kalibrierkugel zusammengesetzt werden.

Das in Bezug Setzen zweier KS wird auch als Registrierung bezeichnet und ergibt insbesondere eine Transformationsvorschrift, z.B. eine Transformationsmatrix, zum Transformieren von Koordinaten von dem einen KS in das andere KS.

Insbesondere werden die Koordinaten mehrerer realer Oberflächenpunkte der Tastkugel und gegebenenfalls einer Kalibrierkugel in einem Koordinatensystem der Tastkugel oder Kalibrierkugel aus der Oberflächenmessung bestimmt.

In einer speziellen Ausführungsform werden Abweichungswerte der realen Kalibrierkugel oder Tastkugel von der Idealform einer Kugel ermittelt. Insbesondere werden mehrere, vorzugsweise alle, durch Oberflächenmessung bestimmte(n) reale Oberflächenpunkte des Tastelements oder Einmesselements mit einem in derselben radialen Richtung liegenden, idealen Oberflächenpunkt einer idealen Kugel verglichen und der Abstand von realem zu idealem Oberflächenpunkt bestimmt. Der Abstand eines realen zu einem idealen Oberflächenpunkt ist der Abweichungswert, der mit einem Vorzeichen versehen wird, um die Richtung der Abweichung anzugeben.

In einer Ausführungsform des Verfahrens werden die Position und Ausrichtung des Referenzmerkmals der Tastkugel und gegebenenfalls einer Kalibrierkugel in dem Koordinatensystem des Koordinatenmessgeräts unter Verwendung des Messsystems des taktil antastenden Koordinatenmessgeräts bestimmt, z.B. wird das Referenzmerkmal der Kalibrierkugel mit einem an dem KMG angeordneten taktilen Referenztaster (d.h. ein hinsichtlich seiner Form und weiterer Eigenschaften, wie z. B. Biegesteifigkeit, genau bekannter Taster) bestimmt. In diesem Fall weist das Referenzmerkmal einen oder mehrere Referenzpunkte auf, deren Koordinaten taktil bestimmbar sind.

Das Referenzmerkmal kann jedes detektierbare Merkmal sein, das geeignet ist, den räumlichen Bezug des Koordinatensystems des separaten Oberflächenmessgeräts zu dem Koordinatensystem der Tastkugel oder Kalibrierkugel und/oder zwischen dem KS der Tastkugel oder Kalibrierkugel zu dem KS des KMG herzustellen. Z.B. kann die Kugel einen oder mehrere Magnetpol-Paare aufweisen und die Position und Ausrichtung mit einem am KMG angeordneten Magnetfeldsensor ermitteln. Bevorzugt werden jedoch Formmerkmale als Referenzmerkmale, die insbesondere mit einem am KMG angekoppelten taktilen Tasters abgetastet werden können.

Das Koordinatensystem der Tastkugel oder Kalibrierkugel kann beispielsweise ein kartesisches Koordinatensystem oder ein Kugelkoordinatensystem sein, wobei letzteres bevorzugt ist. Der Ursprung (Nullpunkt) des Koordinatensystems der Tastkugel oder Kalibrierkugel kann, ohne darauf beschränkt zu sein, im Zentrum der Tastkugel oder Kalibrierkugel liegen. Der Ursprung kann alternativ innerhalb eines Schafts der Tastkugel oder Kalibrierkugel liegen oder ein Punkt des Referenzmerkmals sein.

Bei dem Referenzmerkmal der Tastkugel oder der Kalibrierkugel kann es sich insbesondere um ein Formmerkmal handeln, d.h. die Kugel und/oder ein fest mit der Kugel verbundener Gegenstand (insbesondere ein Schaft, z.B. stiftförmiger Schaft, über den die Kugel an anderen Gegenständen befestigt wird oder aufgestellt wird) sind bzw. ist derart in vorgegebener Weise geformt, dass anhand der vorgegebenen Form und/oder der Position und Ausrichtung des Formmerkmals die Position und Ausrichtung der Kugel in einem beliebigen Koordinatensystem ermittelt werden kann. Insbesondere kann daher anhand des Formmerkmals die Position und Ausrichtung der Kugel im Koordinatensystem des KMG ermittelt werden.

Insbesondere ist das Formmerkmal als eine oder mehrere Erhebungen oder Vertiefungen an einem Schaft der Kalibrierkugel oder der Tastkugel gebildet, die vorzugsweise mit einem taktil antastenden Koordinatenmessgerät bestimmbar sind.

Z.B. kann an dem Schaft der Kugel (insbesondere im Fall eines Taststifts, der eine Tastkugel aufweist) eine plangeschliffene Fläche (d.h. eine ebene Fläche) als Formmerkmal ausgebildet sein. Dabei ist vorzugsweise die Mittelsenkrechte dieser Fläche derart ausgerichtet, dass sie die Schaft-Mittelachse unter einem rechten Winkel schneidet. Dabei verläuft die Verlängerung der Schaft-Mittelachse, bezüglich der der Schaft mit Ausnahme der plangeschliffenen Fläche z.B. symmetrisch ist, vorzugsweise durch den Kugelmittelpunkt der Tastkugel.

Da es sich bei der Tastkugel nicht um eine ideale Kugelform handelt, ist der Kugelmittelpunkt nicht eindeutig definiert. In der Praxis kann aber ein Punkt in der Verlängerung der Schaft-Mittelachse als Kugelmittelpunkt definiert werden und für die Zwecke des Betriebs des KMG genutzt werden, als wenn es sich um eine ideale Kugelform handeln würde. Z.B. können die Korrekturen oder Abweichungen von der idealen Kugelform auf diesen angenommenen Kugelmittelpunkt bezogen werden. Insbesondere kann für die Zwecke des Betriebs des KMG ein Antastvektor definiert werden (wie es an sich aus dem Stand der Technik bekannt ist), der von dem Kugelmittelpunkt zu dem Punkt auf der Oberfläche der Tastkugel zeigt, an der die Tastkugel ein Werkstück oder die Kalibrierkugel antastet.

Beim Herstellen des Bezugs zwischen dem Koordinatensystem der Kugel einerseits und dem Koordinatensystem des Koordinatenmessgeräts andererseits kann insbesondere durch einen taktilen Antastvorgang des KMG mittels der Tastkugel oder einer anderen Tastkugel die plangeschliffene Fläche oder ein anderes Formmerkmal abgetastet werden und somit die Koordinaten der plangeschliffenen Fläche im Koordinatensystem des KMG ermittelt werden. Insbesondere wenn sich die plangeschliffene Fläche an dem Schaft der Tastkugel selbst befindet, kann ein Kalibriernormal (z.B. die Kalibrierkugel) mit dem Formmerkmal abgetastet werden. Daraus kann z.B. wiederum die Mittelsenkrechte der plangeschliffenen Fläche und damit die Position und Ausrichtung der Kugel im Koordinatensystem des KMG ermittelt werden.

Alternativ oder zusätzlich zu einer plangeschliffenen Fläche insbesondere am Schaft der Kugel können andere Formmerkmale vorgegeben sein und an der Kugel und/oder ihrem Schaft ausgebildet sein oder werden. Insbesondere eignet sich ein Vorsprung am Schaft oder der Kugel mit vorgegebener Form, eine Bohrung im Schaft oder nahe dem Schaft in der Kugel, eine Anordnung von mehreren Vorsprüngen und/oder Bohrungen oder Aussparungen (z.B. ein Kugeltrippel, d.h. drei kugelförmige Erhebungen in vordefinierter Position relativ zueinander). Auch können z.B. drei walzenförmige Vorsprünge so angeordnet sein, dass die Längsachsen der Walzen entweder parallel zueinander oder auf einen gemeinsamen einzigen Punkt ausgerichtet zueinander verlaufen.

Ein weiteres Beispiel für ein Formmerkmal z.B. der Kalibrierkugel ist eine kegelförmige Vertiefung, die mit einem Taster bekannter Abmessungen an mehreren Punkten angetastet werden kann. Daraus können die Position und Ausrichtung z.B. der Kegelachse und damit der Bezug zum KS des KMG eindeutig bestimmt werden.

Erfindungsgemäß wird die am KMG montierte Tastkugel selbst, oder der Schaft der Tastkugel, für die Herstellung des Bezuges zwischen den beiden KS genutzt. Vorzugsweise wird dabei die Kalibrierkugel mit dem als Formmerkmal ausgestalteten Referenzmerkmal der Tastkugel angetastet und dadurch Information über die Position und Ausrichtung des Referenzmerkmals der Tastkugel im Koordinatensystem des KMG gewonnen. Daraus wiederum wird der Bezug zwischen dem KS der Tastkugel und dem KS des KMG hergestellt.

Vorzugsweise wird, wie vorangehend beschrieben, auch eine Kalibrierkugel zunächst mit dem Oberflächenmessgerät vermessen und anschließend im Messbereich des KMG angeordnet. Anschließend kann die Position und Ausrichtung eines Referenzmerkmals der Kalibrierkugel in dem Koordinatensystem des Koordinatenmessgeräts unter Verwendung des Messsystems des taktil antastenden Koordinatenmessgeräts bestimmt werden. Hierzu kann ein Referenztaster verwendet werden, z.B. ein Referenztaster mit genau bekannter Form, insbesondere einer Kugelform. Dadurch wird das Koordinatensystem der Kalibrierkugel zu dem Koordinatensystem des Koordinatenmessgeräts in Bezug gesetzt, wodurch die genaue Lage aller Oberflächenpunkte der Kalibrierkugel im Koordinatensystem des KMG bekannt ist oder zumindest ermittelbar ist.

Anschließend kann die Kalibrierkugel zur Bestimmung von Position und Ausrichtung des Referenzmerkmals der Tastkugel verwendet werden und damit der Bezug der Koordinatensysteme von Tastkugel und KMG hergestellt werden. Dabei wird insbesondere auch mit dem Referenzmerkmal der Tastkugel die Kugeloberfläche der Kalibrierkugel taktil angetastet, während die Tastkugel an das KMG angekoppelt ist. Vorzugsweise ist das Referenzmerkmal ein Formmerkmal, wie zuvor erläutert. Das Formmerkmal der Tastkugel kann an der Tastkugel selbst angeordnet sein, z.B. in einem Bereich der Oberfläche der Tastkugel, die nicht zum Antasten von Werkstücken verwendet wird. Alternativ kann das Formmerkmal der Tastkugel an einem mit der Tastkugel fest verbundenen Gegenstand angeordnet sein, insbesondere am Schaft der Tastkugel, z.B. in Form einer Erhebung oder Vertiefung.

Bei der Kalibrierkugel kann es sich wie erwähnt um eine Prüfkugel handeln, mit der die Genauigkeit oder Funktionsweise des gesamten KMG überprüft wird. Sämtliche in dieser Beschreibung beschriebenen Verfahrensschritte, die in Bezug auf eine Kalibrierkugel oder Einmesskugel beschrieben sind, können auch für bzw. in Bezug auf eine Prüfkugel durchgeführt werden. Dies gilt insbesondere für die Vermessung der Oberflächentopographie der Prüfkugel mit einem separaten Oberflächenmessgerät.

Um ein Formmerkmal in Form einer Erhebung oder Abflachung an einem Tasterschaft zu ermitteln, kann mit dem Tasterschaft an der Kalibrierkugel oder einem anderen Kalibriernormal angetastet werden. Z.B. kann das Kalibriernormal mit dem Tasterschaft bei dauerhaftem Kontakt zwischen dem Formmerkmal, aber auch anderen Stellen des Schafts einerseits und der Oberfläche des Kalibriernormals andererseits umfahren (gescannt) werden, sodass die Position und Ausrichtung des Formmerkmals bestimmt werden.

Gemäß einem weiteren Aspekt betrifft die Erfindung ein Verfahren zum Kalibrieren einer Tastkugel eines Koordinatenmessgeräts mit einer Kalibrierkugel, wobei die Verfahrensschritte nach beiliegendem Anspruch 2 durchgeführt werden, und weiterhin folgende Schritte ausgeführt werden:

- taktiles Antasten der Kalibrierkugel mit der Tastkugel aus einer vorgegebenen oder ermittelten (die Ermittlung kann während und/oder nach dem Antasten durchgeführt werden) Antastrichtung,

- Errechnen von zumindest einer Koordinate (z. B. des Radius) eines Berührpunkts, an dem die Tastkugel beim Antasten die Kalibrierkugel berührt, aus der Antastrichtung und aus einem Ergebnis der Vermessung der Oberfläche der Tastkugel und der Kalibrierkugel mit dem separaten Oberflächenmessgerät oder den separaten Oberflächen messgeräten,

- optionales Wiederholen der Schritte des Antastens und Errechnens weiterer Berührpunkte unter Variation der Antastrichtung, d.h. es wird jeweils aus der Antastrichtung und aus Informationen über die Positionen der realen Oberflächenpunkte der Tastkugel und der Kalibrierkugel die zumindest eine Koordinate des Berührpunkts errechnet.

Um dem KMG den Zugriff auf das Ergebnis der Vermessung der Oberfläche der Tastkugel und der Kalibrierkugel mit dem separaten Oberflächenmessgerät oder den separaten Oberflächenmessgeräten zu ermöglichen, können Informationen über die Oberflächentopographie der Tastkugel und/oder der Kalibrierkugel für einen Zugriff durch das Koordinatenmessgerät hinterlegt werden. Optional können außerdem Transformationsinformationen zur Transformation von Koordinaten aus dem KS der Tastkugel bzw. Kalibrierkugel in das KS des KMG für einen Zugriff durch das KMG hinterlegt werden. Das KMG kann dann die Informationen über die Oberflächentopographie der Tastkugel bzw. Kalibrierkugel in das KS des KMG transformieren.

Insbesondere kann der Vorgang der Kalibrierung der Tastkugel auf diese Weise präziser ausgeführt werden, da der Berührpunkt aufgrund der Vermessung der Oberfläche der Tastkugel und der Kalibrierkugel ohne oder bei geringerer Toleranz errechnet wird.

Aus dem Stand der Technik ist es bereits bekannt, mit Hilfe der Information über die Position des Kugelmittelpunkts einer Tastkugel eines taktil antastenden KMG die Antastrichtung zu definieren, in der aus Sicht des Kugelmittelpunktes ein Objekt von der Tastkugel angetastet wird. Für die Berechnung der Koordinaten des von der Tastkugel angetasteten Objektpunktes ist die Kenntnis des Antastvektors oder eine gleichwertige Information in vielen Fällen erforderlich. Der Antastvektor erstreckt sich ausgehend vom Kugelmittelpunkt der Antastkugel in der Antastrichtung zu dem Punkt auf der Oberfläche der Tastkugel, an dem die Tastkugel das Objekt berührt. Es ist bekannt, die Antastrichtung je nach Art des KMG z.B. aus der Antastkraft, die von dem KMG über die Tastkugel auf das Objekt ausgeübt wird, aus der Auslenkung des Tasters (z.B. Taststift mit Tastkugel an seinem freien Ende) beim Antasten des Objekts und/oder aus vorab gekannter Information über das abgetastete Objekt zu bestimmen.

Auch gemäß der vorliegenden Erfindung kann die Antastrichtung in an sich bekannter Weise bestimmt werden. Bei Kenntnis der exakten Kugeloberflächentopographie (z.B. durch die vorhergehende Vermessung der Tastkugel mit einem Oberflächenmessgerät und/oder durch Kalibrieren der Tastkugel mittels Antastung eines Kalibriernormals, z.B. Antasten der Kalibrierkugel) kann nun in Kenntnis der Position des Kugelmittelpunktes und der Antastrichtung die Länge des Antastvektors oder eine entsprechende, gleichwertige Information (z.B. die Position des Oberflächenpunktes der Kugel, an dem die Antastung stattfindet) bestimmt werden. Wenn der Antastvektor auf diese Weise bestimmt wird, kann das weitere Verfahren zur Bestimmung der Koordinaten des angetasteten Oberflächenpunktes des Objekts so ausgeführt werden, wie es an sich aus dem Stand der Technik bekannt ist. Gemäß dem hier beschriebenen Ausführungsbeispiel der Erfindung wird daher nicht von einer konstanten, für jeden Oberflächenpunkt der Tastkugel geltenden Länge der Antastvektoren ausgegangen, sondern wird insbesondere für jede Antastrichtung die Länge des Antastvektors oder eine gleichwertige Information aus Zusatzinformation über die Kugeloberflächentopographie ermittelt.

Da bei einer von der Idealform abweichenden Kugel der Mittelpunkt nicht mehr eindeutig definiert ist, kann für die zuvor beschriebene Ausführungsform der Mittelpunkt definiert werden und damit für die Bestimmung des Antastvektors der Ausgangspunkt des Antastvektors festgelegt werden. Bei der Vermessung der Oberfläche der Kugel durch ein separates Oberflächenmessgerät kann der Kugelmittelpunkt bereits dann definiert werden, wenn die Ergebnisse der Oberflächenvermessung in Bezug auf das Koordinatensystem der Kugel gespeichert werden. Z.B. ist es möglich, den Ursprung des Koordinatensystems der Kugel als Kugelmittelpunkt festzulegen, wenn dieser Ursprung ungefähr im Bereich des Massenschwerpunktes der Kugel liegt (wobei bei einer etwaigen Bestimmung des Massenschwerpunktes Aussparungen in der Kugel, z.B. für die Befestigung eines Schaftes, außer Betracht gelassen werden. Der Ursprung des Koordinatensystems kann z.B. aber auch im Schaft außerhalb der Kugel liegen und es kann dann z.B. ein Kugelmittelpunkt in Verlängerung der Symmetrieachse des Schaftes im Inneren der Kugel definiert werden.

Die Koordinaten der mehreren realen Oberflächenpunkte der Tastkugel und die Koordinaten der mehreren realen Oberflächenpunkte der Kalibrierkugel können beispielsweise in einer Steuerung des KMG hinterlegt werden, beispielsweise in Form einer Datei. Es ist in einer speziellen Ausführungsform auch möglich, für ermittelte reale Oberflächenpunkte des Einmesselements/Tastelement den Abstand eines realen Oberflächenpunkts des Einmesselements zu dem nächstliegenden idealen Oberflächenpunkt eines idealkugelförmigen Einmesselements/Tastelements zu ermitteln und die Abstände als Korrekturwerte in dem Koordinatenmessgerät zu hinterlegen.

Gemäß noch einem Aspekt betrifft die Erfindung ein Verfahren zur Bestimmung von Koordinaten eines Objekts durch ein taktil antastendes Koordinatenmessgerät, d.h. den bestimmungsgemäßen Betrieb des KMG, wobei die Schritte des erfindungsgemäßen Verfahrens oder seiner vorstehend und/oder nachstehend beschriebenen Ausgestaltungen für eine Tastkugel durchgeführt werden, und weiterhin,

- das Objekt mit der Tastkugel aus einer vorgegebenen Antastrichtung angetastet wird oder das Objekt mit der Tastkugel angetastet wird und die Antastrichtung ermittelt wird, mit der das Objekt mit der Tastkugel angetastet wird,

- zumindest eine Koordinate eines Berührpunkts, an der die Tastkugel das Objekt beim Antasten berührt, aus der Antastrichtung und aus einem Ergebnis der Vermessung der Oberfläche der Tastkugel mit dem separaten Oberflächenmessgerät errechnet wird.

Um dem KMG den Zugriff auf das Ergebnis der Vermessung der Oberfläche der Tastkugel mit dem separaten Oberflächenmessgerät zu ermöglichen, können insbesondere Informationen über die Oberflächentopographie der Tastkugel für einen Zugriff durch das Koordinatenmessgerät hinterlegt werden. Optional können außerdem Transformationsinformationen zur Transformation von Koordinaten aus dem KS der Tastkugel in das KS des KMG für einen Zugriff durch das KMG hinterlegt werden. Das KMG kann dann die Informationen über die Oberflächentopographie der Tastkugel in das KS des KMG transformieren.

Diesem Aspekt der Erfindung liegt der Gedanke zugrunde, dass die Oberflächentopographie der Tastkugel mit dem separaten Oberflächenmessgerät vermessen werden kann und dass für die einzelnen Oberflächenpunkte die Toleranz, innerhalb der der Radius (d.h. der Abstand vom Kugelmittelpunkt) liegen kann, sehr viel kleiner ist, als es bei einer für sämtliche Oberflächenpunkte angegebenen Toleranz der Fall ist. Nach Übertragung dieser Informationen über die Oberflächentopographie in das Koordinatensystem des KMG oder des Werkstücks kann daher mit entsprechend geringerer Unsicherheit der Antastpunkt auf der Oberfläche des Werkstücks, d.h. der Berührpunkt, ermittelt werden.

Vorzugsweise wird bei dem Verfahren zuvor mit der Tastkugel eine Einmessung durchgeführt, wie oben beschrieben.

Weitere Aspekte der Erfindung, die unabhängig von oder in Ergänzung zu dem bereits beschriebenen Verfahren ausgeführt werden können, sind nachfolgend beschrieben:

Wenn in Zusammenhang mit der vorliegenden Erfindung ein Einmessen eines Tasters durch Antasten eines Kalibriernormals durchgeführt wird, wird das Einmessen im Vergleich zu einem sonst üblichen Einmessen vorzugsweise mit einer deutlich erhöhten Anzahl von Oberflächenpunkten durchgeführt, um reproduzierbare Fehleranteile und nicht reproduzierbare Fehleranteile zu identifizieren und somit voneinander trennen zu können.

Unter Verwendung von hochgenauen KMG und formkorrigierten oder nahezu idealen Kalibrierkugeln können die Formfehler der Tastkugeln durch Kalibrierung (auch als Einmessung zu bezeichnen) statt durch Vermessung mit einem Oberflächenmessgerät erfasst werden. Dabei können beim Einmessen einer zu korrigierenden Tastkugel durch Antasten der Kalibrierkugel die Formfehler der Tastkugel z.B. als Formabweichungswerte der Kugel erfasst und im KMG gespeichert werden. Die Erfassung der Formabweichungswerte wird zweckmäßig mit stark eingeschränkter Zahl von Freiheitsgraden der Bewegung beim Antasten durchgeführt. Z.B. werden Bewegungen des Tasters und/oder KMG, die sonst möglich sind, blockiert, z.B. durch mechanisches Klemmen. Mit hochgenauen KMG können damit auch kurzwellige Formfehler der Kugeln erfasst werden.

Zuvor wurde der Begriff "kurzwellige" Formfehler verwendet. Dem liegt die Erkenntnis zugrunde, dass Formabweichungen von Kugeln im Vergleich zu idealen Kugelformen nicht statistisch verteilt über die Oberfläche auftreten. Vielmehr befinden sich jeweils zusammenhängende Oberflächenbereiche entweder in einem größeren Abstand (d.h. sie weisen einen größeren Radius auf) oder in einem kleineren Abstand (d.h. sie weisen einen kleineren Radius auf) zum Kugelmittelpunkt. Dabei kann selbstverständlich der Abstand der einzelnen Oberflächenpunkte in dem zusammenhängenden Oberflächenbereich ebenfalls variieren. Unter kurzwelligen Formfehlern werden insbesondere solche Formabweichungen von der idealen Kugelform verstanden, die (z.B. in räumlichen Polarkoordinaten, d.h. Kugelkoordinaten betrachtet) über Winkelbereiche des Azimutwinkels und/oder des Polarwinkels von wenigen Grad variieren, insbesondere ungefähr periodisch variieren.

Die so ermittelten Formfehler der Tastkugeln können in allen Verfahren, die in dieser Erfindungsbeschreibung dargelegt sind, Berücksichtigung finden und/oder korrigiert werden, wobei diese Formfehler vorzugsweise alternativ zu den Formfehlern berücksichtigt werden, die mit einem Oberflächenmessgerät ermittelt wurden. Die Formfehler können im KMG hinterlegt werden, beispielsweise als Datei in der KMG-Steuerung. Generell gilt nicht nur für diesen Aspekt der Erfindung, dass statt einer Hinterlegung von Informationen im KMG (z.B. in einem entsprechenden digitalen Datenformat in einem Datenspeicher, auf den die Steuerung des KMG zugriff hat) auch eine Hinterlegung in einem vom KMG separaten Speicher möglich ist, wobei das KMG dann für dessen Betrieb vorzugsweise Zugriff auf den Speicher hat. Ferner ist es in allen Fällen möglich, dass nicht die Formfehler hinterlegt werden, sondern unmittelbar die Koordinaten oder gleichwertigen Informationen über die Position der einzelnen Oberflächenpunkte der Kugel. Wenn von einer Hinterlegung von Koordinaten von Oberflächenpunkten oder gleichwertigen Informationen in Bezug auf ein Koordinatensystem die Rede ist, das mit einem anderen Koordinatensystem in Bezug gesetzt wurde oder wird (z.B. das Koordinatensystem des separaten Oberflächenmessgeräts einerseits und das Koordinatensystem des KMG oder der Kugel andererseits), dann kann statt der Speicherung der Koordinaten in dem Ziel-Koordinatensystem die Information zur Transformation der Koordinaten aus dem Quell-Koordinatensystem in das Ziel-Koordinatensystem gespeichert werden.

Wenn derartige Informationen auf eine Kugel, z.B. eine Tastkugel, bezogen sind, können sie zusammen mit Informationen über andere Kugeln z.B. in einer gemeinsamen Datenbank gespeichert werden. Z.B. kann auf die Datenbank über das Internet oder über eine andere Datenübertragungsverbindung von einem KMG zugegriffen werden. Alternativ oder zusätzlich ist es möglich, dass die Kugel oder das Kalibriernormal ein Identifizierungsmerkmal aufweist, z.B. einen Computer-lesbaren Chip, einen Strich-Code, der von einem optischen Lesegerät detektierbar ist, oder einen so genannten Tag, der Identifizierungsdaten enthält, die berührungslos mittels elektromagnetischer Felder ausgelesen werden können. Solche Tags sind insbesondere als so genannte RFID-Tags bekannt. Die Steuerung des KMG kann daher insbesondere einen Taster und/oder ein Kalibriernormal mittels des Identifizierungsmerkmals erkennen und die zugehörigen Informationen über die Form und/oder den Formfehler des Tasters und/oder Kalibriernormals beziehen und insbesondere aus der zentralen Datenbank auslesen.

Wenn die Oberfläche der Kugel nicht oder nicht ausschließlich durch ein separates Oberflächenmessgerät bestimmt wird, sondern z.B. durch Einmessen des Tasters, der die Tastkugel aufweist, im Messbereich des Koordinatenmessgeräts, kann z.B. ein Modell der Oberflächenform der Kugel verwendet werden (z.B. das an anderer Stelle in dieser Beschreibung genannte Ellipsoid-Modell) und kann ein ausgezeichneter Punkt in dem Modell als Kugelmittelpunkt definiert werden, z.B. der Schnittpunkt der drei Hauptachsen des Ellipsoids. Nachdem die Parameter des Modells durch Einmessen (d.h. durch eine Kalibrierung) ermittelt worden sind, steht auch die Position des Kugelmittelpunkts fest.

In der Praxis des Betriebs eines KMG wird in vielen Fällen der Antastvektor beim Antasten eines Werkstücks oder anderen Objekts (z.B. der Kalibrierkugel) im Koordinatensystem des Werkstücks bzw. Objekts ermittelt. Wenn der Antastvektor noch nicht in Bezug auf die Zusatzinformationen über die Kugeloberflächentopographie der Tastkugel korrigiert worden ist, kann der ungefähre Antastvektor, der z.B. wie aus dem Stand der Technik bekannt ermittelt wurde, in das Koordinatensystem der Tastkugel transformiert werden. Dabei kann zunächst eine Transformation in das Koordinatensystem des KMG und eine erneute Transformation aus dem Koordinatensystem des KMG in das Koordinatensystem der Tastkugel stattfinden. Im Koordinatensystem der Tastkugel sind die Zusatzinformationen über die Kugeloberflächentopographie bekannt und kann somit der Antastvektor korrigiert werden. Alternativ sind im Koordinatensystem des Werkstücks oder Objekts lediglich die Richtung der Antastung und ein Punkt auf einer Geraden, auf der der Antastvektor verläuft, bekannt und können diese Punkt-Position und die Richtung der Geraden bzw. des Vektors in das Koordinatensystem der Tastkugel transformiert werden. Bei der Position handelt es sich z.B. um die Position des auf der Oberfläche des Werkstücks oder Objekts angetasteten Oberflächenpunktes.

Insbesondere kann die Zusatzinformation über die Kugeloberflächentopographie im Koordinatensystem der Tastkugel oder Kalibrierkugel in räumlichen Polarkoordinaten angegeben werden und für die weitere Verwendung gespeichert werden. Die Punkte auf der Oberfläche der Kugel, deren Position bekannt ist, sind daher durch den Azimutwinkel und den Polarwinkel sowie durch den Abstand (entsprechend dem Radius einer Kugel) zum Kugelmittelpunkt definiert.

Am Ort der Kalibriermessung können reproduzierbare KMG-Restfehler die Tastereinmessung verfälschen. Reproduzierbare, ortsabhängige Fehler des KMG können wie im Folgenden beschrieben mittels einer virtuellen Kugel beschrieben werden. Die virtuelle Kugel ist im Koordinatensystem des KMG definiert oder es ist zumindest die Information zur Transformation in das Koordinatensystem des KMG bekannt. Solche reproduzierbaren Fehler des KMG sind z.B. auf Gewichte und Momente (im Sinne eines Drehmoments) von Teilen (z.B. Armen) des KMG zurückzuführen. Ist z.B. ein Arm des KMG bis an seine Endposition ausgefahren und erstreckt sich der Arm z.B. in horizontale Richtung, treten Biegemomente auf, die zu einer reproduzierbaren Verfälschung des Messergebnisses beim Antasten eines Werkstücks führen. Für zumindest einige Punkte auf der virtuellen Kugel wird daher festgestellt (durch Kalibrierung), welche Abweichung von der idealen Kugelform der virtuellen Kugel dem reproduzierbaren Fehler des KMG entspricht. Wird z.B. der Arm des KMG von der Steuerung des KMG gesteuert an eine Sollposition im Koordinatensystem des KMG verfahren, befindet sich dann aber nicht in der Soll-Position, sondern an einer anderen Position, definiert der Vektor, der von der Sollposition zu der tatsächlichen Position zeigt, eine Korrektur, die während des Betriebes des KMG beim Antasten eines Werkstücks oder anderen Objekts ausgeführt werden kann.

Insbesondere können solche reproduzierbaren Fehler bei der Einmessung eines Tasters, mit dem das KMG Werkstück taktil antasten soll, berücksichtigt werden. Bei der Einmessung wird z.B. eine Kalibrierkugel oder ein anderes Kalibriernormal mittels des Tasters angetastet. Die reproduzierbaren Fehler des KMG verfälschen die Einmessung. Handelt es sich bei dem Kalibriernormal um eine Kalibrierkugel, liegen die Sollpositionen des KMG (z.B. die Sollpositionen des Kugelmittelpunktes der Tastkugel des Tasters) auf einer Kugeloberfläche einer virtuellen Kugel um den Kugelmittelpunkt der Kalibrierkugel. Die reproduzierbaren, ortsabhängigen Fehler des KMG können daher wie Abweichungen der Kugeloberfläche der Kalibrierkugel von ihrer idealen Form betrachtet werden. Eine Korrektur der reproduzierbaren, ortsabhängigen Fehler des KMG kann daher in derselben Weise durchgeführt werden, wie eine Korrektur aufgrund von Abweichungen der tatsächlichen Kugeloberfläche der Kalibrierkugel von der idealen Kugeloberfläche. Liegen außerdem Informationen über diese Abweichung der tatsächlichen Kugeloberfläche von der Idealform vor (im allgemeineren Fall: es liegen Informationen über die Kugeloberflächentopographie vor), können die Korrekturwerte zur Berücksichtigung der reproduzierbaren, ortsabhängigen Fehler des KMG und entsprechende Veränderung der Kugeloberflächentopographie der Kalibrierkugel berücksichtigt werden. Dies gilt im einfachen Fall einer idealen Kugelform der Kalibrierkugel entsprechend. Es entsteht somit eine virtuelle Kugeloberfläche, bei deren Berücksichtigung während des Vorgangs der Einmessung eines Tasters durch Antasten der Kugeloberfläche der Kalibrierkugel die reproduzierbaren, ortsabhängigen Fehler des KMG korrigiert werden.

Die reproduzierbaren ortsabhängigen Fehler des KMG können in allen Verfahren, die in dieser Erfindungsbeschreibung dargelegt sind, Berücksichtigung finden bzw. korrigiert werden. Die reproduzierbaren ortsabhängigen Fehler können dazu im KMG hinterlegt werden, beispielsweise als Datei in der KMG-Steuerung.

Bei dem Verfahren zur Berücksichtigung/Korrektur reproduzierbarer ortsabhängiger Fehler kann mit dem KMG am Ort der Kalibrierkugel mit einer formkorrigierten oder genau gefertigten Tastkugel an einer formkorrigierten oder genauen Kalibrierkugel eine Einmessung durchgeführt werden, wobei beliebige Kombinationen dieser Kugeln eingesetzt werden können.

Die Korrektur reproduzierbarer ortsabhängiger Fehler kann mit der Korrektur von KMG-Führungsfehlern in Zusammenhang stehen. Vorzugsweise wird die Korrektur reproduzierbarer ortsabhängiger Fehler verworfen, wenn diese Fehler z.B. durch Laserkalibrierung oder Änderung der Rechtwinkligkeits-Korrekturwerte geändert werden und vorzugsweise werden die ortsabhängigen Fehler dann neu bestimmt.

Alle Verfahren der vorliegenden Erfindung sind auch mit Tastern, Einmess- oder Prüfelementen durchführbar, die keine Kugelform sondern eine anderweitige Form aufweisen, wie z.B. Kegel und Zylinder.

Zum Umfang der Erfindung gehört ferner ein System mit_einem Oberflächenmessgerät und mit einem taktil antastenden Koordinatenmessgerät, wobei,

- das Koordinatenmessgerät als Tastelement eine von der Idealform einer Kugel abweichende Tastkugel, aufweisend ein Referenzmerkmal, aufweist,
- eine Steuerung des Koordinatenmessgeräts ausgestaltet ist, einen Betrieb des Koordinatenmessgeräts so zu steuern, dass das Koordinatenmessgerät mit der Tastkugel ein Objekt taktil abtastet, und daraus erhaltene Abtastinformationen auszuwerten und dadurch ein Koordinatensystem der Tastkugel oder Kalibrierkugel zu einem Koordinatensystem des Koordinatenmessgeräts in Bezug zu setzen,
- das Oberflächenmessgerät ein Interferometer ist,
- die Steuerung des Koordinatenmessgeräts ausgestaltet ist, von dem Oberflächenmessgerät aus einer Vermessung der Oberfläche der Tastkugel gelieferte Messwerte über die reale Kugelform oder daraus gewonnene Oberflächen-Informationen der Kugel für die Gewinnung von Koordinaten eines mit der Tastkugel taktil angetasteten Objekts, insbesondere einer Kalibrierkugel, zu verwenden.

Wie oben erwähnt, kann das Oberflächenmessgerät ein separates Gerät sein, das als Oberflächenmessgerät zur Formbestimmung der Kugeloberfläche eingesetzt wird.

Die Erfindung wir nachfolgend anhand von Ausführungsbeispielen beschrieben. Es zeigen:

Fig. 1     in schematischer Darstellung eine Anordnung mit einem KMG und einem separaten Oberflächenmessgerät,

Fig. 2     das Antasten einer Kalibrierkugel mit einer Tastkugel,

Fig. 3     die Ansicht einer Tast-, Einmess- oder Prüfkugel mit einem Referenzmerkmal,

Fig. 4     die Koordinaten eines Oberflächenpunktes einer Tast-, Einmess- oder Prüfkugel im Koordinatensystem der Tast-, Einmess- oder Prüfkugel,

Fig. 5a-c   verschiedene Ausgestaltungen von Formmerkmalen als Referenzmerkmale am Schaft einer Kugel,

Fig. 6a     eine Ansicht auf eine Anordnung, in der eine Kalibrierkugel mit dem Schaft einer am KMG montierten Tastkugel abgetastet wird,

Fig. 6b     eine Ansicht auf die Anordnung gemäß Fig. 6a aus einer Richtung senkrecht zur Blickrichtung der Fig. 6a,

Fig. 7     das Ergebnis eines Abtastvorgangs nach Fig. 6a und Fig. 6b,

Fig. 8     ein Flussdiagramm zur Darstellung einzelner Verfahrensschritte,

Fig. 9     ein Flussdiagramm zur Darstellung eines einzelner Verfahrensschritte, wobei optional reproduzierbare, ortsabhängige Fehler des KMG erfasst und berücksichtigt werden,

Fig. 10     ein Flussdiagramm zur Darstellung einzelner Verfahrensschritte, wobei Informationen über die Form eines Tasters beim Einmessen des Tasters am KMG erhalten werden.

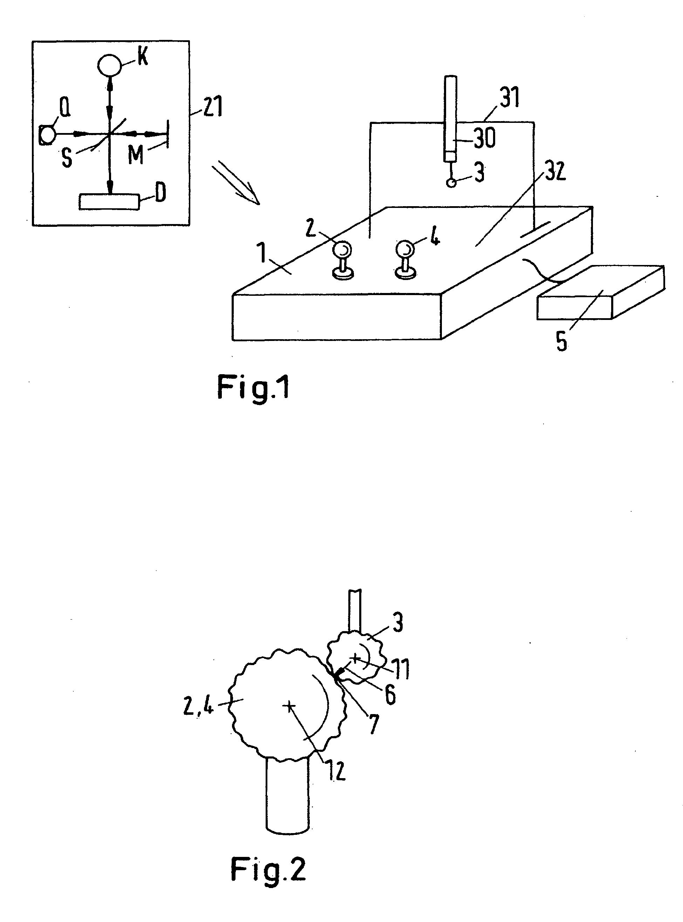

Fig. 1 zeigt schematisch ein Koordinatenmessgerät (KMG) 1 mit einer Prüfkugel 2, einer Tastkugel 3, einer Einmesskugel 4 und einer Steuerung 5 zur Steuerung des Betriebes des KMG. Die Tastkugel 3 ist über einen Taststiftschaft 8 an einer Pinole 30 und damit an einer verfahrbaren Brücke 31 montiert. Die Prüfkugel 2 und die Einmesskugel 4 sind im Messbereich des KMG auf der Grundplatte 32 montiert. Mit der am KMG 1 angekoppelten Tastkugel 3 (die insbesondere wie üblich Teil eines Taststifts ist, der an ein KMG an- und abgekoppelt werden kann) ist das KMG 1 in der Lage, gesteuert durch die Steuerung 5 Objekte im Messbereich des KMG 1 taktil anzutasten. Insbesondere gilt dies für die in Fig. 1 dargestellte Prüfkugel 2 und Einmesskugel 4.

Oben links in Fig. 1 ist schematisch ein Oberflächenmessgerät 21 dargestellt, das als Interferometer ausgeführt ist. Aus einer Strahlungsquelle Q wird ein Messstrahl in der Darstellung nach rechts abgestrahlt und fällt auf einen semitransparenten Spiegel S, der den Messstrahl in einen nach oben reflektierten eigentlichen Messstrahl zum Abtasten einer Kugel K und einen Referenzstrahl teilt, der nach rechts weiterläuft. Während der eigentliche Messstrahl von der Kugeloberfläche wieder nach unten reflektiert wird und durch den semitransparenten Spiegel S hindurch auf einen Detektor D fällt, wird der Referenzstrahl rechts von einem Spiegel M zurückreflektiert und ein Teil des reflektierten Strahls wiederum durch den semitransparenten Spiegel S nach unten zu dem Detektor D reflektiert. Der Detektor D ermittelt aus dem Ergebnis einer Interferenz der beiden Strahlen (von der Kugel K reflektierter Messstrahl einerseits und Referenzstrahl andererseits) die exakte Position des Ortes auf der Oberfläche der Kugel K, an dem der Messstrahl reflektiert wurde. In Kenntnis der Position des Kugelmittelpunktes der Kugel K in Bezug auf die Messanordnung lässt sich daher z.B. der exakte Radius (Abstand vom Kugelmittelpunkt) des Oberflächenpunktes bestimmen, an dem der Messstrahl reflektiert wurde.

Die Ergebnisse der Vermessung der Kugeloberfläche der Kugel K werden (wie durch einen Doppellinien-Pfeil in Fig. 1 angedeutet) dem KMG zur Verfügung gestellt. Bei der Kugel K kann es sich um die Tastkugel 3, die Prüfkugel 2 oder die Einmesskugel 4 handeln. Es können auch nacheinander mehrere der genannten Kugeln durch das Interferometer 21 bezüglich der Oberflächentopographie der Kugel (d.h. im Hinblick auf Formfehler) vermessen werden. Es ist selbstverständlich auch möglich, mehrere separate Oberflächenmessgeräte zu verwenden. Die Oberflächenmessgeräte müssen sich auch nicht im gleichen Raumgebiet wie das KMG 1 befinden. Insbesondere kann das Oberflächenmessgerät 21 von einer Zertifizierungsorganisation oder einem KMG-Hersteller betrieben werden und kann sich das KMG beim Endanwender befinden, z.B. einem Kunden des KMG-Herstellers.

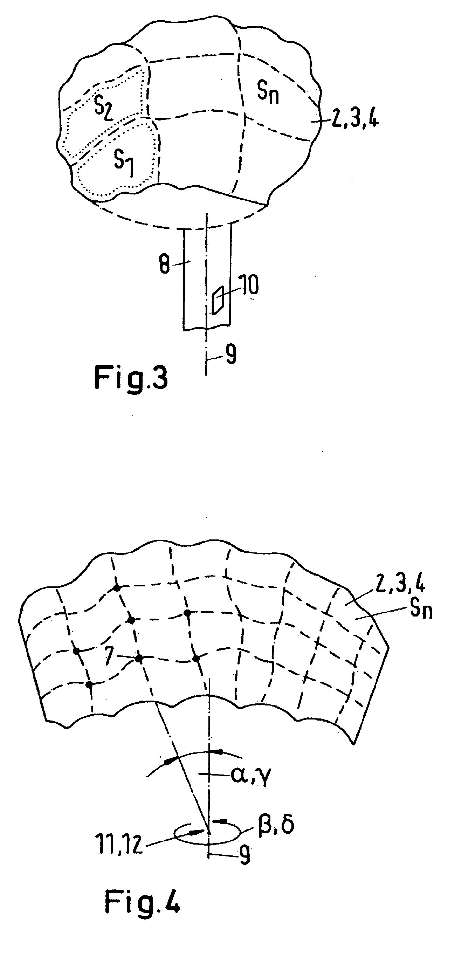

Fig. 3 zeigt in übertriebener Darstellung eine nicht ideal kugelförmige Oberfläche der Prüfkugel 2, Tastkugel 3, oder Einmesskugel 4. Die Kugel ist an einem Schaft 8 befestigt, der ein Referenzmerkmal 10 (z.B. einen plangeschliffenen Oberflächenbereich) aufweist. Die Schaftmittelachse ist mit dem Bezugszeichen 9 gekennzeichnet. Mit einem Oberflächenmessgerät (z.B. 21 in Fig. 1) werden Koordinaten realer Oberflächenpunkte der Kugel bestimmt. Mit dem Oberflächenmessgerät können absolute Koordinaten oder Abweichungswerte von einer Ideal-Kugelform bestimmt werden. Die Ermittlung von Abweichungswerten aus dem Oberflächenmessgerät erfolgt typischerweise als Kugelsegmentmessung. So vermessene Kugelsegmente (S1-Sn) werden entweder über den Bezug jedes Segments zum KS des Oberflächen-Messgeräts oder vorteilhafter über einen best-fit der Messbereichsüberlappung der Segmente zu einem für die KMG-Messung ausreichenden Gesamt-Oberflächenbereich zusammengesetzt. Fig. 3 zeigt mehrere der Oberflächensegmente $S_1$, ... $S_n$, die durch gestrichelte Linien voneinander getrennt sind. Während der Vermessung der Segmente S wird jedoch über den durch die gestrichelten Linien begrenzten Bereich hinaus gemessen, so dass überlappende Messbereiche entstehend, d.h. Bereiche, die bei der Vermessung der benachbarten Segmente mehrfach gemessen wurden und so als Information für das Zusammenfügen der Segmente zu einem Gesamt-Oberflächenbereich zur Verfügung stehen. Z.B. bei den Segmenten $S_1$ und $S_2$ sind durch gepunktete Linien umrahmte Bereiche dargestellt, die nicht mehr zu den Überlappungsbereichen gehören.

In der Fig. 4 ist im Koordinatensystem der Prüfkugel 2, Tastkugel 3, oder Einmesskugel 4 die Position eines Oberflächenpunktes 7 einer Prüfkugel 2, Tastkugel 3, oder Einmesskugel 4 dargestellt. Die Position ist in räumlichen Polarkoordinaten angegeben, wobei im Fall einer Tastkugel 3 das Winkelpaar des Polarwinkels $\alpha$ und des Azimutwinkels $\beta$ die Koordinaten des Punktes 7 auf einer Tastkugel relativ zum Mittelpunkt 11 der Tastkugel 3 (der insbesondere auf der Verlängerung der Schaft-Mittelachse (z. B. Schaft-Zylinderachse) 9 der Tastkugel liegt) angibt, und im Fall einer Kalibrierkugel 2 oder 4 das Winkelpaar des Polarwinkels $\gamma$ und des Azimutwinkels $\delta$ die Koordinaten des Punktes 7 auf der Kalibrierkugel relativ zum Mittelpunkt 12 der Kalibrierkugel 2 oder 4 (der insbesondere auf der Verlängerung der Schaftzylinderachse 9 der Kalibrierkugel liegt) angibt. Die Mittelpunkte 11, 12 können nach Antasten der Kugeloberfläche an mindestens drei Oberflächenpunkten z. B. mit einem Referenztaster festgelegt werden.

Durch die Vermessung mit dem Oberflächenmessgerät können somit bezogen auf den Mittelpunkt 11,12 für eine Vielzahl von Winkelpaaren ($\alpha$, $\beta$) bzw. ($\gamma$, $\delta$) die Radien der Oberflächenpunkte (zum Beispiel Punkt 7 und weitere) und/oder die Abweichungen vom Radius einer idealen Kugelform, d.h. die Abweichung der Oberflächenpunkte von den jeweils nächstgelegenen Oberflächenpunkten einer angenommenen Idealkugel, ermittelt werden. Bei dem Radius handelte sich um die dritte Koordinate des Oberflächenpunkts, der bei den realen Kugelformen variabel ist. Bei einer idealen Kugelform ist der Radius dagegen konstant.

Nicht nur in Bezug auf das hier beschriebene Ausführungsbeispiel werden die Radien oder die Abweichungswerte entweder als Tabelle oder vorzugsweise als mathematische Beschreibung der Oberfläche (z.B. als Splineraster) beschrieben. Im Fall der mathematischen Beschreibung ist es somit möglich, innerhalb eines der mathematischen Beschreibung zugeordneten Oberflächenbereichs der Kugel den Radius eines beliebigen Punkts auf der Oberfläche zu berechnen. Im Fall der Tabelle werden die Radien und/oder Abweichungswerte unter Zuordnung zu den Winkelpaaren ($\alpha$,$\beta$) oder ($\gamma$,$\delta$) oder zu entsprechenden Koordinaten in einem anderen Koordinatensystem für den automatischen Zugriff durch das KMG hinterlegt (d.h. gespeichert) und z. B. in einem Datenspeicher gespeichert, auf denen die Steuerung 5 des KMG bei Ausführung von Steuerungs-Software Zugriff hat. Raumwinkel (die durch das genannte Winkelpaar definiert sind), für die der Radius oder Korrekturwert nicht gemessen und/oder nicht hinterlegt ist, können zum Beispiel durch Interpolation (z.B. Spline- oder Linearinterpolation) aus nächstgelegenen Stützstellen berechnet werden.

Insbesondere kann auf diese Weise für einen Berührpunkt auf der Oberfläche der Kugel der genaue Radius ausgelesen oder ermittelt werden und für die weitere Vorbereitung des Betriebes des Koordinatenmessgerätes oder für den bestimmungsgemäßen Gebrauch des Koordinatenmessgerätes genutzt werden.

Fig. 2 zeigt das Antasten einer Kalibrierkugel 2 oder 4 mit einer Tastkugel 3. Bei einer taktilen Antastung mit einem so genannten "aktiv messenden" Sensor (d. h. ein Sensor, der beim Antasten eines Objekts mit der Tastkugel selbständig, ohne die weiteren Antriebe des KMG eine Messkraft erzeugt, mit der die die Tastkugel an die Oberfläche des Objekts gedrückt wird) ist die Antastrichtung 6 senkrecht zur Messoberfläche aus dem Stromvektor der Messkraftspulen bekannt. Bei einem "passiv messenden" Sensor (d. h. ein Sensor, bei dem die Tastkugel von den nicht im Sensor integrierten Antrieben des KMG an die Oberfläche des Objekts gedrückt wird) kann die Antastrichtung aus der Auslenkung des Tasters ermittelt werden. Aus der Antastrichtung wiederum lässt sich in Kenntnis der Koordinaten des Kugelmittelpunkts 11 der Tastkugel 3 und des Mittelpunkts 12 der Kalibrierkugel der Berührpunkt 7 der beiden Kugeln berechnen, wobei die Radien des Berührpunkts 7 der Tastkugel und der Kalibrierkugel dazu genutzt werden, die Koordinaten des Berührpunkts 7 zu bestimmen.

In der Regel werden die Koordinaten der Kugelmittelpunkte 11, 12 lediglich ungefähr bzw. in guter Näherung bekannt sein, da es sich bei den Kugeln um reale, von der idealen Kugelforum abweichende Kugeln handelt und/oder da die Positionen der Mittelpunkte im Koordinatensystem des Koordinatenmessgerätes näherungsweise bestimmt wurden. Aus der Antastrichtung allein lässt sich die Position des Berührpunkts daher nur näherungsweise bestimmen. Es ist aber möglich, zunächst die Position des Berührpunkts näherungsweise zu bestimmen und dann unter Berücksichtigung der Radien zu korrigieren. Insbesondere ergibt sich der Korrekturwert aus der Summe der Tastkugelformabweichung und Kalibrierkugelformabweichung. Beim bestimmungsgemäßen Gebrauch des Koordinatenmessgeräts, das heißt bei der Abtastung eines Werkstücks, wird nur die Formabweichung der Tastkugel 2 korrigiert. Die Position des Berührpunkts kann in beiden Fällen aber auch unmittelbar unter Berücksichtigung der Radien oder des Radius der Tastkugel aus der Antastrichtung ermittelt werden.

Die Berechnung der Korrekturwerte oder unmittelbare Ermittlung der Position des Berührpunkts erfolgt vorzugsweise in Echtzeit für jeden Messpunkt in der KMG-Steuerung 5. D.h auch im Scanningmodus kann die reale Form einer Prüfkugel 2, Tastkugel 3, oder Einmesskugel 4 berücksichtigt werden.

Wie erwähnt können die Informationen über die Form von Prüfkugeln 2, Tastkugeln 3 oder Einmesskugeln 4 für den Zugriff durch ein KMG hinterlegt werden. Wird der Zugriff erforderlich, z. B. weil ein Wechsel der Prüfkugel, des Tasters mit der Tastkugel und/oder der Einmesskugel 4 durchgeführt wird, kann das KMG z. B. gesteuert durch die Steuerung 5 anhand eines Identifikationsmerkmals der Kugel (z.B. Chip, RFID oder Barcode, s.o.) erkennen, welcher Taster oder Kugel aktuell verwendet wird. Auf Basis dieser Information kann das KMG auf die zugeordneten Forminformationen zugreifen und verwenden.

Da beim Vorgang der Kalibrierung eines Tasters (Einmessen durch das KMG) die Informationen über die Kugelform(en) berücksichtigt werden, werden beim Einmessen ermittelte andere (außer dem Tastermittelpunkt) Kalibrierparameter, wie z. B. Parameter zur Korrektur der Tasterbiegung bei Einwirkung von Kräften, genauer bestimmt. Dies führt z. B. zusätzlich zur Verbesserung der Kugelspezifikationen $MPE_p$ und $MPE_{thp}$ nach ISO 10360 auch zu einer Verbesserung der weiteren Spezifikationen $MPE_{ron1}$ (Lehrringformabweichung) und $MPE_e$ (Absolutmassoffset).

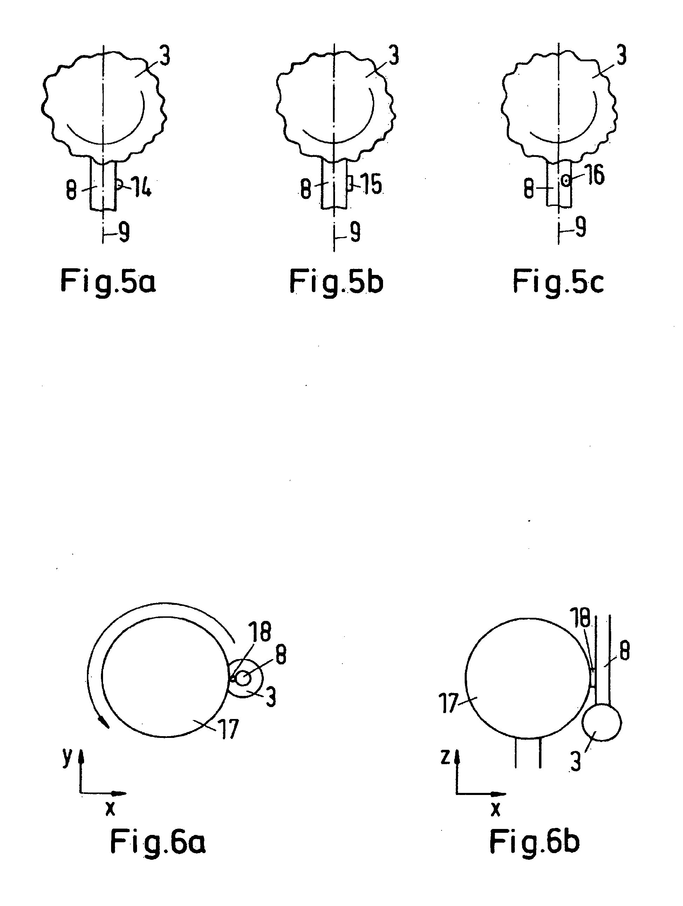

Fig. 5a zeigt ein Referenzmerkmal am Schaft 8 einer Kugel, insbesondere der Tastkugel 3, in Form einer teilweise in den Schaft eingebrachten und teilweise hervorstehenden Kugel 14. Fig. 5b zeigt ein Referenzmerkmal am Schaft 8 einer Kugel, insbesondere der Tastkugel 3, in Form eines teilweise in den Schaft eingebrachten und teilweise hervorstehenden Zylinders 15. Fig. 5c zeigt ein Referenzmerkmal am Schaft 8 einer Kugel, insbesondere der Tastkugel 3, in Form einer kegelförmigen Vertiefung 15. Diese Referenzmerkmale sind vorzugsweise auf die Schaft-Mittelachse 9 ausgerichtet, d.h. das hervorstehende Kugelsegment gemäß Fig. 5a weist eine Rotationssymmetrieachse auf, die die Schaft-Mittelachse senkrecht schneidet, das hervorstehende Zylindersegment gemäß Fig. 5b weist eine Rotationssymmetrieachse auf, die parallel zur Schaft-Mittelachse 9 verläuft oder die die Schaft-Mittelachse 9 senkrecht schneidet, und eine Rotationssymmetrieachse der Aussparung 16 gemäß Fig. 5c schneidet die Schaft-Mittelachse 9 senkrecht.

Wird das Formmerkmal (siehe z.B. Fig. 5c) als Aussparung, insbesondere kegelförmige Bohrung 16, an der Kalibrierkugel realisiert, kann z. B. mit einem hinsichtlich seiner Form genau bekannten Taster die Aussparung 16 angetastet werden. Im Fall einer kegelförmigen Bohrung kann das Antasten selbstzentrierend durchgeführt werden, das heißt beim Antasten wird automatisch die Richtung des Zentrums der Bohrung (Kegelspitze) erkannt. Daraus kann nun die Position und Ausrichtung der Formmerkmals der Kalibrierkugel und damit auch die Position und Ausrichtung der Kalibrierkugel selbst ermittelt werden.

Wird das Formmerkmal z.B. an der Kalibrierkugel durch eine Kugel 14 beziehungsweise durch ein erhabenes Kugelsegment ausgeführt, wie in Fig. 5a gezeigt, so kann mit einem hinsichtlich seiner Form genau bekannten Taster der Kugelmittelpunkt des erhabenen Formmerkmals durch Antasten von mindestens drei Oberflächenpunkten des erhabenen Formmerkmals in an sich bekannter Weise ermittelt werden. Bezogen auf die Schaft-Mittelachse 9 kann nun die Position und Ausrichtung des Formmerkmals eindeutig bestimmt werden.

In Fig. 6a und 6b ist das Abtasten einer Kalibrierkugel 17 mit dem Schaft 8 einer am KMG montierten Tastkugel 3 aus zwei verschiedenen Perspektiven gezeigt. In Fig. 6a liegt die Figurenebene z. B. in der X-Y-Ebene eines kartesischen Koordinatensystems X-Y-Z, z. B. eines Koordinatensystems des KMG. In Fig. 6b liegt die Figurenebene z. B. in der X-Z-Ebene des kartesischen Koordinatensystems X-Y-Z. Mit einem Formmerkmal 18 (z. B. eine Erhebung am Tasterschaft 8) und anderen Oberflächenbereichen des Tasters wird die Kalibrierkugel 17 angetastet. Der Antastvorgang wird insbesondere als Scan (Entlangfahren an der Kugeloberfläche und kontinuierliches oder quasi-kontinuierliches Aufnehmen von Koordinaten-Messwerten durch das KMG) ausgeführt. Vorzugsweise wird eine geschlossene kreisförmige Linie auf der Oberfläche der Kugel gescannt, z. B. ein Vollkreis, d.h. ein Kreis der Länge des Äquators der Kugel. Im Ausführungsbeispiel wird ein Vollkreis in der X-Y-Ebene gescannt.

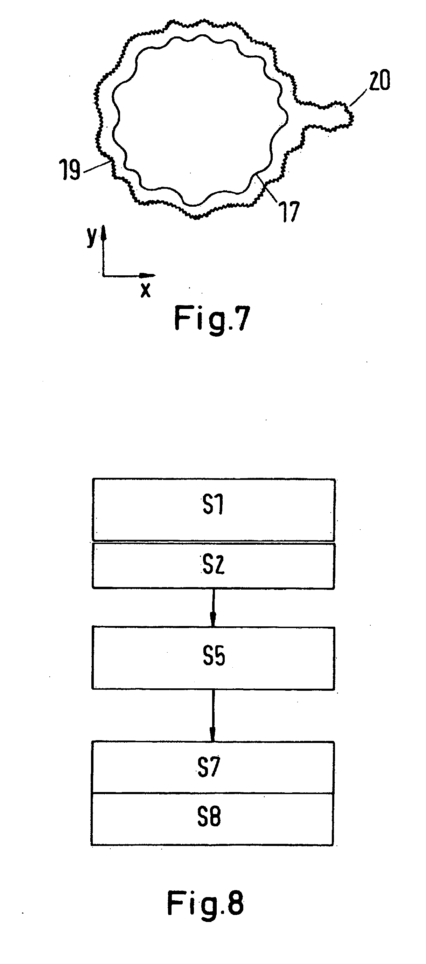

In Fig. 7 ist eine resultierende Linie 19 in der X-Y-Ebene dargestellt, auf der sich der Kugelmittelpunkt der Tastkugel 3 oder ein Punkt auf der Schaft-Mittelachse der Tastkugel 3 beim Scan um die Kalibrierkugel 17 herum bewegt hat. Da das Formmerkmal 18 in dem Ausführungsbeispiel eine zylindrische oder kugelförmige Erhebung aufweist, weist die Linie 19 entsprechend geformte Ausstülpung 20 auf, die entstanden ist, weil die Erhebung den Abstand zur Oberfläche der Kalibrierkugel 17 vergrößert hat. Entsprechend kann aber auch in einem Fall verfahren werden, in dem der Schaft der Tastkugel 3 oder die Tastkugel 3 selbst eine Abflachung aufweist. In diesem Fall verringert die Abflachung den Abstand zur Kugeloberfläche der Kalibrierkugel 17.

Durch Auswertung der Linie 19 beziehungsweise entsprechender Messinformation des KMG aus dem Scan der Kalibrierkugel 17 kann nun die Position und Ausrichtung des Formmerkmals oder unmittelbar die Position und Ausrichtung der Tastkugel 3 im Koordinatensystem des KMG ermittelt werden. Dabei wird vorhandene Informationen über die Position und Ausrichtung des Formmerkmals im Koordinatensystem der Tastkugel 3 berücksichtigt.

Nachfolgend wird ein Ausführungsbeispiel beschrieben, bei dem die Oberfläche der Kugel nicht oder nicht ausschließlich durch ein separates Oberflächenmessgerät bestimmt wird, sondern durch Einmessen des Tasters, der die Tastkugel aufweist, im Messbereich des Koordinatenmessgeräts. Es wird ein Modell der Oberflächenform der Kugel verwendet, wobei die Korrektur mit 6 Freiheitsgraden mit Hilfe eines Ellipsoids beschrieben ist.

Die zu korrigierende Kugel wird als Ellipsoid betrachtet. Dieses Ellipsoid kann mit Hilfe der Länge der drei Hauptachsen a, b, und c in bekannter Weise beschrieben werden. Da es sich um ein Ellipsoid handelt, müssen alle Punkte, deren Koordinaten z. B. in einem kartesischen Koordinatensystem X-Y-Z durch x, y, z bezeichnet werden, der Oberfläche folgende Gleichung erfüllen:

$$\frac{x^2}{a^2} + \frac{y^2}{b^2} + \frac{z^2}{c^2} = 1$$

Für die spätere Berücksichtigung der Informationen über die Form der realen Kugel erfolgt die Beschreibung des Ellipsoids z. B. mit einer symmetrischen 3x3 Matrix.

Der wirksame Radius wr eines Oberflächenpunkts (bezogen auf den Mittelpunkt des Ellipsoids) kann durch Multiplikation einer Ellipsoid - Matrix $Q$ mit dem Antastrichtungsvektor $d$ und Bildung des Betrages des Produkts errechnet werden:

$$\text{wr} = \overline{Q * d} \qquad (1)$$

Beispielsweise ergibt sich für ein Ellipsoid mit a = 1,6 mm, b = 1,5 mm und c = 1,4 mm und bei Ausrichtung der Hauptachsen parallel zu den Koordinatenachsen des kartesischen Koordinatensystems des KMG die Diagonalmatrix :

$$Q = \begin{pmatrix} 1.6 & 0.0 & 0.0 \\ 0.0 & 1.5 & 0.0 \\ 0.0 & 0.0 & 1.4 \end{pmatrix};$$

Z. B. für eine Antastrichtung in der X-Y-Ebene unter 45° sowohl zur X-Richtung als auch Y-Richtung ergibt sich der Antastrichtungsvektor:

$$d = \begin{pmatrix} \cos 45° \\ \sin 45° \\ 0 \end{pmatrix};$$

Mit Gleichung (1) ergibt sich damit der wirksame Radius zu wr = 1,55 mm.

Bei anderer Orientierung der Achsen des Ellipsoiden zu den KMG Achsen ergibt sich entsprechend eine symmetrische 3x3 Matrix.

Z.B. implementiert durch Computer-Software, die in einer Steuerung des KMG abläuft, kann das zuvor beschriebene Verfahren auf folgende Weise realisiert werden: Die aus dem Stand der Technik bekannte Verfahrensweise beim Taster-Einmessen, bei der Tastkugelradius und die Position des Kugelmittelpunkts der Tastkugel mit Hilfe einer Kugelfunktion berechnet wird, wird durch eine Ellipsoid-Bestfitberechnung ersetzt, d.h. die bei dem Einmessen mittels der Tastkugel von dem KMG ermittelten Abtast-Informationen werden in das Ellipsoid-Modell gefittet. Dazu können an sich bekannte Rechenverfahren eingesetzt werden. Zur späteren Verwendung der so erhaltenen Informationen über die reale Kugelform der Tastkugel wird statt des Tasterradius einer idealen Kugel eine Radien-Matrix gespeichert, die demnach neun Werte einer 3x3 Matrix aufweist. Diese repräsentiert das Ellipsoid. Die Eigenvektoren der Matrix entsprechen den Achsen des Ellipsoids. In der Steuerung (z. B. in der Software) wird jede Abfrage des Tasterradius ersetzt durch eine Funktion, die die Antastrichtung als Eingangsgröße erhält und wie bisher im Stand der Technik den Tastkugelradius des zugehörigen Berührpunkts zurückliefert, wobei die Funktion die oben beschriebene Matrixoperation gemäß Gleichung (1) ausführt.

Für eine ideale Kugel nimmt das Ellipsoid Kugelgestalt an. Die Hauptachsen sind demnach gleich lang und die Matrixwerte außerhalb der Diagonalen sind gleich null. Daher würde von der Funktion für jede Antastrichtung der gleiche Radius zurückgeliefert.

Für stark elliptische Tastkugeln ergibt sich durch das oben beschriebene Verfahren ein systematischer Fehler: Zur Bestimmung eines Berührpunkts zwischen Tastkugel und Objekt wird der Tastkugelradius in manchen Fällen mit einer negativen Antastrichtung multipliziert und das Ergebnis dieses Rechenschrittes vektoriell zum Ortsvektor des Berührpunkts hinzu addiert. Dabei wird jedoch nicht die am Berührpunkt vorhandene Krümmung des Oberflächenverlaufs der Tastkugel berücksichtigt. Daher kann alternativ zu der vorangegangenen Beschreibung nicht der wirksame Tasterradius wr sondern unmitelbar das Ergebnis der Multiplikation der Radien-Matrix mit dem Vektor der negativen Antastrichtung zurückgeliefert und verwendet werden.

Zusammenfassend ist festzustellen, dass durch die Betrachtung der Taststiftkugel als Ellipsoid ein Teil der Formabweichungen von der in der idealen Kugelform korrigiert werden kann. Vorteil dieses (im Vergleich zu der Berücksichtigung einer Vielzahl von Oberflächen-Messpunkten) einfachen Verfahrens ist es, dass nur wenige Freiheitsgrade benötigt werden. Dadurch ist es insbesondere möglich, die Formabweichungen durch Einmessen der am KMG montierten Tastkugel zu bestimmen.

Gemäß dem Flussdiagramm in Fig. 8 werden in Schritt S1 mit einem Oberflächenmessgerät oder mit einer Mehrzahl von Oberflächenmessgeräten Informationen über die Oberflächentopographie zumindest einer Tastkugel und einer Kalibrierkugel gewonnen. Es können jedoch in gleicher Weise auch mehrere Tastkugeln und/oder mehrere Kalibrierkugeln von dem zumindest einen Oberflächenmessgerät bezüglich ihrer Oberflächentopographie vermessen werden. In dem folgenden Schritt S2 werden die in Schritt S1 gewonnenen Messwerte und/oder daraus abgeleitete Informationen über die Oberflächentopographie der Kugeln insbesondere getrennt für jede Kugel gespeichert, wobei zumindest später ein Zugriff durch ein KMG auf die gespeicherten Informationen möglich ist.

In Schritt S5 wird eine der in Schritt S1 vermessenen Kalibrierkugeln als Einmesskugel in den Messbereich eines KMG gebracht und wird außerdem eine Tastkugel (die z.B. das Tastelement eines Taststifts ist), die ebenfalls in Schritt S1 vermessen wurde, an das KMG angekoppelt, so dass die Tastkugel als Tastelement des KMG zum taktilen Antasten von Objekten verwendbar ist. Nun wird die Tastkugel durch taktiles Antasten der Einmesskugel eingemessen. Optional können in diesem Schritt weitere Kalibrierparameter des KMG, des Tasters und/oder eines Tastkopfes, an dem die Tastkugel als Tastelemente angekoppelt ist, durch Kalibrierung mittels Antastung der Kalibrierkugel durch die Tastkugel gewonnen werden. In jedem Fall wird in Schritt S5 die Information über die Oberflächentopographie der Tastkugel und die Information über die Oberflächentopographie der Kalibrierkugel verwendet, um die Berührpunkte, an denen die Tastkugel die Oberfläche der Kalibrierkugel berührt, mit verbesserter Genauigkeit zu bestimmen. "Verbessert" bedeutet, dass nicht von einer Idealform der Kugeln ausgegangen wird und lediglich eine Toleranz für den Kugelradius angegeben ist, sondern dass die Abweichung des Radius des Berührpunkts von der Idealform einer Kugel und/oder zumindest eine Koordinate des Berührpunkts (z.B. der Radius bezogen auf den jeweiligen Kugelmittelpunkt) aus den Informationen über die Kugeloberflächentopographie bestimmt wird.

Gemäß Schritt S7, der einmal oder wiederholt, z.B. in größeren zeitlichen Abständen von einem Jahr, ausgeführt werden kann, wird eine in Schritt S1 vermessene Prüfkugel im Messbereich des KMG angeordnet und unter Verwendung zumindest einer in Schritt S1 vermessenen Tastkugel von dem Koordinatenmessgerät taktil angetastet, um das KMG zu prüfen und gegebenenfalls ein entsprechendes Abnahmezertifikat zu erstellen.

Beim Abtasten eines Werkstücks mit dem am KMG angekoppelten Taster, d.h. mit der Tastkugel als Tastelement, wird Information über die Oberflächentopographie der Tastkugel aus Schritt S1 zur Bestimmung der Koordinaten von Berührpunkten zwischen der Tastkugel und dem Werkstück verwendet (Schritt S8).

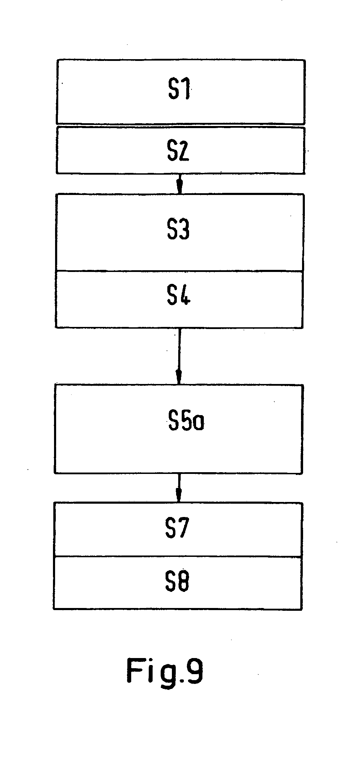

Fig. 9 zeigt ein gegenüber Fig. 8 modifiziertes Flussdiagramm, in dem aber die Schritte S1, S2 sowie S7 und S8 in gleicher Weise wie anhand von Fig. 8 beschrieben enthalten sind.

Nach Schritt S2 kann aber im Unterschied zu Fig. 8 optional eine Berücksichtigung von reproduzierbaren, ortsabhängigen Fehlern des KMG stattfinden. Hierzu wird wie auch bei Schritt S5 ein Taster (z.B. ein Taster mit einer Tastkugel als Tastelement) und wird außerdem eine Kalibrierkugel als Einmesskugel verwendet. Wie oben bereits beschrieben können die reproduzierbaren, ortsabhängigen Fehler des KMG als virtuelle Abweichungen von einer idealen Kugelform der Einmesskugel ermittelt und z. B. im folgenden Schritt S4 abgespeichert werden, so dass das KMG Zugriff auf die abgespeicherten Informationen erhalten kann.

Im darauf folgenden Schritt S5a findet das eigentliche Einmessen des Tasters statt, wobei der Schritt wie Schritt S5 im Flussdiagramm von Fig. 8 ausgeführt werden kann, aber optional zusätzlich die in Schritt S3 gewonnene Information berücksichtigt wird, um die reproduzierbaren, ortsabhängigen Fehler des KMG für die Zwecke der Bestimmung der Koordinaten der Berührpunkte zwischen dem Tastelement und der Einmesskugel zu berücksichtigen.

Die Schritte S7 und S8 können ebenfalls wie die Schritte S1 und S2 in der gleichen Weise wie anhand von Fig. 8 beschrieben ausgeführt werden.

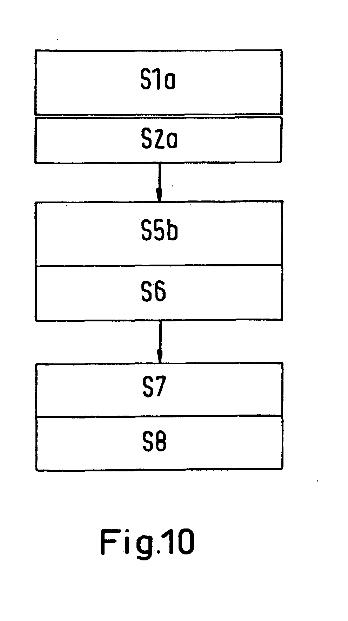

In Fig. 10 werden die Schritte S1 und S2 wie anhand von Fig. 8 beschrieben in modifizierter Form ausgeführt und werden die Schritte S7 und S8 wie anhand von Fig. 8 beschrieben ausgeführt. Die Modifikation in den Schritten S1 a und S2a gegenüber den Schritten S1 und S2 besteht darin, dass zumindest ein Taster, der in Schritt S7 und/oder in Schritt S8 von dem KMG als taktil antastender Taster verwendet wird, nicht in Schritt S1 von einem Oberflächenmessgerät vermessen wird oder zumindest die aus einer solchen Oberflächenvermessung ermittelten Informationen über die Oberflächentopographie des Tastelements des Tasters nicht oder nur gemeinsam mit den in dem folgenden Schritt S5b gewonnenen Informationen in Schritt S7 und/oder in Schritt S8 verwendet werden.

In Schritt S5b wird Oberflächeninformation über die reale Kugeloberfläche der Tastkugel eines Tasters gewonnen, indem die an das KMG angekoppelte Tastkugel als Tastelement zum taktilen Antasten der Kugeloberfläche einer Einmesskugel verwendet wird. Dabei ist die Einmesskugel in Schritt S1 a vermessen worden und die entsprechende Information über die Oberflächentopographie in Schritt S2a für den Zugriff durch das KMG abgespeichert worden. Alternativ kann es sich bei der Einmesskugel aber um ein so genanntes Meisterteil handeln, das lediglich in nicht erheblicher Weise von der Idealform einer Kugel abweicht.

Insbesondere wird mit der Tastkugel in Schritt S5b die Oberfläche der Einmesskugel an mehreren Orten angetastet, wobei auch die Position des Berührpunktes auf der Oberfläche der Tastkugel variiert, und dadurch wird die Information über die reale Kugeloberfläche der Tastkugel gewonnen. In Schritt S6 wird diese Information und/oder daraus abgeleitete Information für den Zugriff durch das KMG abgespeichert.

**Patentansprüche**

1. Verfahren zur Vorbereitung des Betriebes eines taktil antastenden Koordinatenmessgeräts (1), insbesondere zur Vorbereitung der Kalibrierung eines Koordinatenmessgeräts (1) durch taktiles Antasten eines Kalibrierelements (2, 4) mit einem an dem Koordinatenmessgerät (1) angeordneten Taster (3, 8), umfassend die folgenden Schritte,

   - Vermessen der Oberfläche der von einer Idealform einer Kugel abweichenden Tastkugel (3) als Tastelement des Koordinatenmessgeräts (1), mit einem Oberflächenmessgerät (21) und Bestimmen von Koordinaten mehrerer realer Oberflächenpunkte der Tastkugel in einem Koordinatensystem der Tastkugel,
   - in Bezug Setzen eines Referenzmerkmals (14; 15; 16) der Tastkugel (3) zu dem Koordinatensystem der Tastkugel (3),
   - Montieren der Tastkugel (3) an einem taktil antastenden Koordinatenmessgerät (1) in dem Messbereich des taktil antastenden Koordinatenmessgeräts (1),
   - in Bezug Setzen des Koordinatensystems eines Kalibriernormals (2, 4) zu dem Koordinatensystem des Koordinatenmessgeräts (1),
   - Erhalt von Abtastinformationen durch Abtasten des Kalibriernormals (2, 4) mit der am KMG montierten Tastkugel (3) und/oder durch Abtasten des Kalibriernormals (2, 4) mit einem Schaft (8) der am KMG montierten Tastkugel (3),
   - Ermittlung der Position und Ausrichtung des Referenzmerkmals (14; 15; 16) der Tastkugel (3) im Koordinatensystem des KMG durch Auswertung der Abtastinformationen,
   - in Bezug Setzen des Koordinatensystems der Tastkugel (3) zu dem Koordinatensystem des Koordinatenmessgeräts (1), sodass Informationen über Positionen der realen Oberflächenpunkte der Tastkugel in dem Koordinatensystem des Koordinatenmessgeräts (1) vorhanden oder bestimmbar sind.

2. Verfahren nach Anspruch 1, wobei das Kalibriernormal (2,4) eine Kalibrierkugel ist, insbesondere eine Prüfkugel oder Einmesskugel, und mit der Kalibrierkugel die folgenden Schritte durchgeführt werden:

   - Vermessen der Oberfläche der von einer Idealform einer Kugel abweichenden Kalibrierkugel (2, 4), mit einem Oberflächenmessgerät (21) und Bestimmen von Koordinaten mehrerer realer Oberflächenpunkte der Kalibrierkugel (2, 4) in einem Koordinatensystem der Kalibrierkugel (2, 4),
   - in Bezug Setzen eines Referenzmerkmals (14; 15; 16) der Kalibrierkugel (2, 4) zu dem Koordinatensystem der Kalibrierkugel (2, 4),
   - Anordnen der Kalibrierkugel (2, 4) in dem Messbereich des taktil antastenden Koordinatenmessgeräts (1),

   sodass beim in Bezug Setzen des Koordinatensystems der Kalibrierkugel (2, 4) zu dem Koordinatensystem des Koordinatenmessgeräts (1) Informationen über Positionen der realen Oberflächenpunkte der Kalibrierkugel (2, 4) in dem Koordinatensystem des Koordinatenmessgeräts (1) vorhanden oder bestimmbar sind.

3. Verfahren nach Anspruch 2, wobei die Position und Ausrichtung des Referenzmerkmals (14; 15; 16) der Kalibrierkugel in dem Koordinatensystem des Koordinatenmessgeräts (1) unter Verwendung des Koordinaten-Messsystems des taktil antastenden Koordinatenmessgeräts (1) bestimmt wird.

4. Verfahren nach einem der Ansprüche 1-3, wobei das Referenzmerkmal ein Formmerkmal der Kalibrierkugel (2, 4) oder der Tastkugel (3) oder ein Formmerkmal eines mit der Kalibrierkugel (2, 4) oder der Tastkugel (3) fest verbundenen Gegenstandes ist.

5. Verfahren zum Kalibrieren einer Tastkugel (3) eines Koordinatenmessgeräts (1) mit einer Kalibrierkugel (2, 4), wobei die Verfahrensschritte des Verfahrens gemäß Anspruch 2 durchgeführt werden, und weiterhin aufweisend folgende Schritte:

    - taktiles Antasten der Kalibrierkugel (2, 4) mit der Tastkugel (3) aus einer vorgegebenen oder ermittelten Antastrichtung,
    - Errechnen von zumindest einer Koordinate eines Berührpunkts (7), an dem die Tastkugel (3) beim Antasten die Kalibrierkugel (2, 4) berührt, aus der Antastrichtung und aus einem Ergebnis der Vermessung der Oberfläche der Tastkugel (3) und der Kalibrierkugel (2, 4) mit dem separaten Oberflächenmessgerät (21) oder den separaten Oberflächenmessgeräten,
    - optionales Wiederholen der Schritte des Antastens und Errechnens weiterer Berührpunkte unter Variation der Antastrichtung, d.h. es wird jeweils aus der Antastrichtung und aus Informationen über die Positionen der realen Oberflächenpunkte der Tastkugel (3) und der Kalibrierkugel (2, 4) zumindest eine Koordinate des Berührpunkts errechnet.

6. Verfahren zur Bestimmung von Koordinaten eines Objekts durch ein taktil antastendes Koordinatenmessgerät (1), wobei die Verfahrensschritte des Verfahrens gemäß Anspruch 1 oder 2 für eine Tastkugel (3) durchgeführt werden, und weiterhin

    - das Objekt mit der Tastkugel (3) aus einer vorgegebenen Antastrichtung angetastet wird oder das Objekt mit der Tastkugel (3) angetastet wird und die Antastrichtung ermittelt wird, mit der das Objekt mit der Tastkugel (3) angetastet wird,
    - zumindest eine Koordinate eines Berührpunkts (7), an der die Tastkugel (3) das Objekt beim Antasten berührt, aus der Antastrichtung und aus einem Ergebnis der Vermessung der Oberfläche der Tastkugel (3) mit dem separaten Oberflächenmessgerät (21) errechnet wird.

7. Verfahren nach Anspruch 6, wobei zuvor die Tastkugel (3) gemäß Anspruch 5 kalibriert wird.

8. Verfahren zur Korrektur von Prüfwerten bei der Prüfung einer Tastkugel (3) eines Koordinatenmessgeräts (1) mit einer Prüfkugel, bei dem die Schritte des Verfahrens nach Anspruch 2 durchgeführt werden, wobei eine Prüfkugel als Kalibrierkugel eingesetzt wird, und weiterhin umfassend

    - Hinterlegung der Koordinaten der mehreren realen Oberflächenpunkte der Tastkugel (3) in dem Koordinatenmessgerät (1),
    - Hinterlegung der Koordinaten der mehreren realen Oberflächenpunkte der Prüfkugel in dem Koordinatenmessgerät (1),
    - Antasten der Prüfkugel mit der Tastkugel (3) aus einer vorgegebenen oder ermittelten Antastrichtung,
    - Errechnen von zumindest einer Koordinate des Berührpunkts (7) zwischen der Prüfkugel und der Tastkugel (3) aus der Antastrichtung und den Koordinaten der realen Oberflächenpunkte der Tastkugel (3) und der Prüfkugel,
    - optional die Wiederholung der Schritte des Antastens und Errechnens der zumindest einen Koordinate weiterer Berührpunkte unter Variation der Antastrichtung.

9. System mit einem Oberflächenmessgerät (21) und mit einem taktil antastenden Koordinatenmessgerät (1), wobei,

    - das Koordinatenmessgerät (1) als Tastelement eine von der Idealform einer Kugel abweichende Tastkugel (3), aufweisend ein Referenzmerkmal, aufweist,
    - eine Steuerung (5) des Koordinatenmessgeräts (1) ausgestaltet ist, einen Betrieb des Koordinatenmessgeräts (1) so zu steuern, dass das Koordinatenmessgerät (1) mit der Tastkugel (3) ein Objekt (2, 4) taktil antastet, und daraus erhaltene Abtastinformationen auszuwerten und dadurch ein Koordinatensystem der Tastkugel (3) zu einem Koordinatensystem des Koordinatenmessgeräts (1) in Bezug zu setzen,
    - das Oberflächenmessgerät ein Interferometer ist,
    - die Steuerung (5) des Koordinatenmessgeräts (1) ausgestaltet ist, von dem Oberflächenmessgerät (21) aus einer Vermessung der Oberfläche der Tastkugel (3) gelieferte Messwerte über die reale Kugelform oder daraus gewonnene Oberflächen-Informationen der Kugel (3) für die Gewinnung von Koordinaten eines mit der Tastkugel (3) taktil angetasteten Objekts, insbesondere einer Kalibrierkugel (2, 4), zu verwenden.

**Claims**

1. Method for preparing the operation of a coordinate measuring machine (1) probing in a tactile manner, in particular for preparing the calibration of the coordinate measuring machine (1) by tactile probing of a calibration element (2, 4) using a sensing device (3, 8) arranged at the coordinate measuring machine (1), comprising the following steps:

   - measuring the surface of the probe sphere (3), deviating from the ideal shape of a sphere, as a sensing element of the coordinate measuring machine (1) using a surface measuring device (21) and determining coordinates of a plurality of real surface points of the probe sphere in a coordinate system of the probe sphere,
   - relating a reference feature (14; 15; 16) of the probe sphere (3) to the coordinate system of the probe sphere (3),
   - assembling the probe sphere (3) at a coordinate measuring machine (1) probing in a tactile manner in the measurement range of the coordinate measuring machine (1) probing in a tactile manner,
   - relating the coordinate system of a calibration standard (2, 4) to the coordinate system of the coordinate measuring machine (1),
   - obtaining scanning information by scanning the calibration standard (2, 4) using the probe sphere (3) assembled at the CMM and/or by scanning the calibration standard (2, 4) using a shaft (8) of the probe sphere (3) assembled at the CMM,
   - establishing the position and alignment of the reference feature (14; 15; 16) of the probe sphere (3) in the coordinate system of the CMM by evaluating the scanning information,
   - relating the coordinate system of the probe sphere (3) to the coordinate system of the coordinate measuring machine (1) such that information about positions of the real surface points of the probe sphere is available or determinable in the coordinate system of the coordinate measuring machine (1).

2. Method according to Claim 1, wherein the calibration standard (2, 4) is a calibration sphere, in particular a test sphere or a measuring sphere, and the following steps are performed using the calibration sphere:

   - measuring the surface of the calibration sphere (2, 4), deviating from an ideal shape of the sphere, using a surface measuring device (21) and determining coordinates of a plurality of real surface points of the calibration sphere (2, 4) in the coordinate system of the calibration sphere (2, 4),
   - relating a reference feature (14; 15; 16) of the calibration sphere (2, 4) to the coordinate system of the calibration sphere (2, 4),
   - arranging the calibration sphere (2, 4) in the measurement range of the tactile probing coordinate measuring machine (1),

   such that information about positions of the real surface points of the calibration sphere (2, 4) in the coordinate system of the coordinate measuring machine (1) is available or determinable when relating the coordinate system of the calibration sphere (2, 4) to the coordinate system of the coordinate measuring machine (1).

3. Method according to Claim 2, wherein the position and alignment of the reference feature (14; 15; 16) of the calibration sphere is determined in the coordinate system of the coordinate measuring machine (1) using the coordinate measuring system of the coordinate measuring machine (1) probing in a tactile manner.

4. Method according to one of Claims 1-3, wherein the reference feature is a form feature of the calibration sphere (2, 4) or of the probe sphere (3) or a form feature of an article securely connected to the calibration sphere (2, 4) or probe sphere (3).

5. Method for calibrating a probe sphere (3) of the coordinate measuring machine (1) using a calibration sphere (2, 4), wherein the method steps of the method according to Claim 2 are performed, furthermore comprising the following steps:

   - tactile probing of the calibration sphere (2, 4) using the probe sphere (3) from a predetermined or established probing direction,
   - calculating at least one coordinate of a contact point (7), at which the probe sphere (3) contacts the calibration sphere (2, 4) during probing, from the probing direction and from a result of measuring the surface of the probe sphere (3) and the calibration sphere (2, 4) using the separate surface measuring device (21) or the separate surface measuring devices,
   - optional repeating of the steps of probing and calculating further contact points while varying the probing direction, i.e. at least one coordinate of the contact point is calculated from the probing direction and from information about the positions of the real surface points of the probe sphere (3) and the calibration sphere (2, 4).

6. Method for determining coordinates of an object by a coordinate measuring machine (1) probing in a tactile manner, wherein the method steps of the method according to Claim 1 or 2 are performed for a probe sphere (3), and furthermore

- the object being probed by the probe sphere (3) from a predetermined probing direction or the object being probed by the probe sphere (3) and the probing direction, from which the object is probed by the probe sphere (3), being established,
- at least one coordinate of a contact point (7), at which the probe sphere (3) contacts the object during probing, being calculated from the probing direction and from the result of measuring the surface of the probe sphere (3) using the separate surface measuring device (21).

7. Method according to Claim 6, wherein the probe sphere (3) is initially calibrated according to Claim 5.

8. Method for correcting test values when testing a probe sphere (3) of a coordinate measuring machine (1) using a test sphere, in which the steps of the method according to Claim 2 are performed, wherein a test sphere is used as calibration sphere, furthermore comprising

- storing the coordinates of the plurality of real surface points of the probe sphere (3) in the coordinate measuring machine (1),
- storing the coordinates of the plurality of real surface points of the test sphere in the coordinate measuring machine (1),
- probing the probe sphere (3) from a predetermined or established probing direction,
- calculating at least one coordinate of the contact point (7) between the test sphere and the probe sphere (3) from the probing direction and the coordinates of the real surface points of the probe sphere (3) and the test sphere,
- optionally repeating the steps of probing and calculating the at least one coordinate of further contact points while varying the probing direction.

9. System comprising a surface measuring device (21) and a coordinate measuring machine (1) probing in a tactile manner, wherein

- the coordinate measuring machine (1), as a probe element, has a probe sphere (3), deviating from the ideal form of a sphere, having a reference feature,
- a controller (5) of the coordinate measuring machine (1) is configured to control an operation of the coordinate measuring machine (1) in such a way that the coordinate measuring machine (1) probes an object (2, 4) in a tactile manner using the probe sphere (3) and evaluates scanning information obtained therefrom and thereby relates a coordinate system of the probe sphere (3) to a coordinate system of the coordinate measuring machine (1),
- the surface measuring device is an interferometer,
- the controller (5) of the coordinate measuring machine (1) is configured to use measured values, supplied by the surface measuring device (21) from measuring the surface of the probe sphere (3), relating to the real sphere form or surface information of the sphere (3) obtained therefrom for obtaining coordinates of an object, in particular a calibration sphere (2, 4), probed by the probe sphere (3) in a tactile manner.

## Revendications

1. Procédé de préparation du fonctionnement d'un appareil de mesure de coordonnées à palpage tactile (1), notamment pour préparer la calibration d'un appareil de mesure de coordonnées (1) par palpage tactile d'un élément de calibration (2, 4) au moyen d'un palpeur (3, 8) disposé sur l'appareil de mesure de coordonnées (1), comprenant les étapes consistant à

- mesurer la surface de la bille de palpage (3) s'écartant de la forme idéale d'une bille en tant qu'élément de palpage de l'appareil de mesure de coordonnées (1), au moyen d'un appareil de mesure de surface (21) et déterminer des coordonnées de multiples points de surface réels de la bille de palpage dans un système de coordonnées de la bille de palpage,
- mettre en relation une caractéristique de référence (14 ; 15 ; 16) de la bille de palpage (3) avec le système de coordonnées de la bille de palpage (3),
- monter la bille de palpage (3) sur un appareil de mesure de coordonnées à palpage tactile (1) dans la région de mesure de l'appareil de mesure de coordonnées à palpage tactile (1),
- mettre en relation le système de coordonnées d'un étalon de calibration (2, 4) avec le système de coordonnées de l'appareil de mesure de coordonnées (1),
- recevoir des informations d'échantillonnage en échantillonnant l'étalon de calibration (2, 4) au moyen de la bille de palpage (3) montée sur l'appareil de mesure de coordonnées (KMG) et/ou en échantillonnant l'étalon de calibration (2, 4) au moyen d'un arbre (8) de la bille de palpage (3) montée sur le KMG,

la détermination de la position et l'orientation de la caractéristique de référence (14 ; 15 ; 16) de la bille de palpage (3) dans le système de coordonnées du KMG en évaluant les informations d'échantillonnage,
- mettre en relation le système de coordonnées de la bille de palpage (3) avec le système de coordonnées de l'appareil de mesure de coordonnées (1) de manière à ce que des informations concernant des positions des points de surface réels de la bille de palpage dans le système de coordonnées de l'appareil de mesure de coordonnées (1) soient présentes ou puissent être déterminées.

2. Procédé selon la revendication 1, dans lequel l'étalon de calibration (2, 4) est une bille de calibration, notamment une bille d'essai ou une bille de mesurage et en ce que les étapes suivantes sont effectuées à l'aide la bille de calibration :

- mesurer la surface de la bille de calibration (2, 4) s'écartant d'une forme idéale d'une bille au moyen d'un appareil de mesure de surface (21) et déterminer des coordonnées de multiples points de surface réels de la bille de calibration (2, 4) dans un système de coordonnées de la bille de calibration (2, 4),
- mettre en relation une caractéristique de référence (14 ; 15 ; 16) de la bille de calibration (2, 4) avec le système de coordonnées de la bille de calibration (2, 4),
- disposer la bille de calibration (2, 4) dans la région de mesure de l'appareil de mesure de coordonnées à palpage tactile (1),

de manière à ce que, lors de la mise en relation du système de coordonnées de la bille de calibration (2, 4) avec le système de coordonnées de l'appareil de mesure de coordonnées (1), des informations concernant les positions des points de surface réels de la bille de calibration (2, 4) dans le système de coordonnées de l'appareil de mesure de coordonnées (1) soient présentes ou puissent être déterminées.

3. Procédé selon la revendication 2, dans lequel la position et l'orientation de la caractéristique de référence (14 ; 15 ; 16) de la bille de calibration dans le système de coordonnées de l'appareil de mesure de coordonnées (1) sont déterminées par utilisation du système de mesure de coordonnées de l'appareil de mesure de coordonnées à palpage tactile (1).

4. Procédé selon l'une quelconque des revendications 1-3, dans lequel la caractéristique de référence est une caractéristique de forme de la bille de calibration (2, 4) ou de la bille de palpage (3) ou une caractéristique de forme d'un objet solidaire de la bille de calibration (2, 4) ou de la bille de palpage (3).

5. Procédé de calibration d'une bille de palpage (3) d'un appareil de mesure de coordonnées (1) au moyen d'une bille de calibration (2, 4), dans lequel les étapes du procédé selon la revendication 2 sont effectuées, et comprenant en outre les étapes consistant à :

- palper tactilement la bille de calibration (2, 4) au moyen de la bille de palpage (3) à partir d'une direction prédéterminée ou obtenue,
- calculer au moins une coordonnée d'un point de contact (7) sur lequel la bille de palpage (3) vient au contact de la bille de calibration (2, 4) lors du palpage, à partir de la direction de palpage et d'un résultat de la mesure de la surface de la bille de palpage (3) et de la bille de calibration (2, 4) au moyen de l'appareil de mesure de surface (21) séparé ou des appareils de mesure de surface séparés,
- répéter facultativement les étapes de palpage et de calcul d'autres points de contact en faisant varier la direction de palpage, c'est-à-dire qu'on calcule respectivement au moins une coordonnée du point de contact à partir de la direction de palpage et d'informations concernant les positions des points de surface réels de la bille de palpage (3) et de la bille de calibration (2, 4).

6. Procédé de détermination de coordonnées d'objets au moyen d'un appareil de mesure de coordonnées à palpage tactile (1), dans lequel les étapes du procédé selon la revendication 1 ou 2 sont effectuées pour une bille de palpage (3), et dans lequel, en outre

- l'objet est palpé au moyen de la bille de palpage (3) à partir d'une direction de palpage prédéterminée ou l'objet est palpé au moyen de la bille de palpage (3) et la direction de palpage dans laquelle l'objet est palpé au moyen de la bille de palpage (3) est déterminée,
- au moins une coordonnée d'un point de contact (7) sur lequel la bille de palpage (3) vient au contact de l'objet lors du palpage est calculée à partir de la direction de palpage et d'un résultat de la mesure de la surface de la bille de palpage (3) au moyen de l'appareil de mesure de surface séparé (21).

7. Procédé selon la revendication 6, dans lequel la bille de palpage (3) est préalablement étalonnée selon la revendication 5.

8. Procédé de correction de valeurs d'essai lors de l'essai d'une bille de palpage (3) d'un appareil de mesure de coordonnées (1) au moyen d'une bille d'essai, lors duquel les étapes du procédé selon la revendication 2 sont effectuées, dans lequel une bille d'essai est utilisée en tant que bille de calibration et consistant en outre à

- consigner les coordonnées des multiples points de surface réels de la bille de palpage (3) dans l'appareil de mesure de coordonnées (1),
- consigner les coordonnées de multiples points de surface de la bille d'essai dans l'appareil de mesure de coordonnées (1),
- palper la bille d'essai au moyen de la bille de palpage (3) à partir d'une direction de palpage prédéterminée ou obtenue,
- calculer au moins une coordonnée du point de contact (7) entre la bille d'essai et la bille de palpage (3) à partir de la direction de palpage et des coordonnées des points de surface réels de la bille de palpage (3) et de la bille d'essai,
- répéter facultativement les étapes de palpage et de calcul de l'au moins une coordonnée d'autres points de contact en faisant varier la direction de palpage.

9. Système comportant un appareil de mesure de surface (21) et un appareil de mesure de coordonnées à palpage tactile (1), dans lequel

- l'appareil de mesure de coordonnées (1) comprend, en tant qu'élément de palpage, une bille de palpage (3) s'écartant de la forme idéale d'une bille, comprenant une caractéristique de référence,
- une unité de commande (5) de l'appareil de mesure de coordonnées (1), conçue pour commander un fonctionnement de l'appareil de mesure de coordonnées (1) de manière à ce que l'appareil de mesure de coordonnées (1) palpe de manière tactile un objet (2, 4) au moyen de la bille de palpage (3) et pour évaluer des informations de palpage ainsi obtenues et ainsi mettre en relation un système de coordonnées de la bille de palpage (3) avec un système de coordonnées de l'appareil de mesure de coordonnées (1),
- l'appareil de mesure de surface est un interféromètre,
- l'unité de commande (5) de l'appareil de mesure de coordonnées (1) est conçue pour utiliser des valeurs de mesure délivrées par l'appareil de mesure de surface (21) à partir d'une mesure de la surface de la bille de palpage (3) concernant la forme de bille réelle ou des informations de surface de la bille (3) déduites de celle-ci afin d'en déduire des coordonnées d'un objet palpé de manière tactile au moyen de la bille de palpage (3), notamment d'une bille de calibration (2, 4).

Fig.1

Fig.2

Fig.3

Fig.4

22

Fig.5a

Fig.5b

Fig.5c

Fig.6a

Fig.6b

Fig.7

Fig.8

Fig.9

| S1a |
|---|
| S2a |

| S5b |
|---|
| S6 |

| S7 |
|---|
| S8 |

# Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011000277 A1
- EP 2385342 A1
- US 2002189319 A1

**In der Beschreibung aufgeführte Nicht-Patentliteratur**

- Ultraprecision micro-CMM using a low force 3D touch probe. **KÜNG et al.** Measurement Science and Technology. IOP, vol. 18, 319-327